(19) Europäisches Patentamt
European Patent Office
Office européen des brevets

(11) **EP 1 842 361 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **05825216.4**

(22) Anmeldetag: **23.12.2005**

(51) Int Cl.:
***H04N 1/58*** *(2006.01)*

(86) Internationale Anmeldenummer:
**PCT/EP2005/057147**

(87) Internationale Veröffentlichungsnummer:
**WO 2006/069980 (06.07.2006 Gazette 2006/27)**

(54) **VERFAHREN, COMPUTERPROGRAMM, COMPUTER UND DRUCKSYSTEM ZUM TRAPPING VON BILDDATEN**

METHOD, COMPUTER PROGRAM, COMPUTER AND PRINTING SYSTEM FOR TRAPPING IMAGE DATA

PROCEDE, PROGRAMME D'ORDINATEUR, ORDINATEUR ET SYSTEME D'IMPRESSION POUR LE PIEGEAGE DE DONNEES IMAGE

(84) Benannte Vertragsstaaten:
**DE FR GB**

(30) Priorität: **27.12.2004 DE 102004062841**

(43) Veröffentlichungstag der Anmeldung:
**10.10.2007 Patentblatt 2007/41**

(73) Patentinhaber: **OCÉ Printing Systems GmbH**
**85586 Poing (DE)**

(72) Erfinder:
• **WEINER, Helmut**
**81371 München (DE)**

• **SIEMENS, Rüdiger**
**81825 München (DE)**

(74) Vertreter: **Schaumburg, Thoenes, Thurn, Landskron, Eckert**
**Patentanwälte**
**Postfach 86 07 48**
**81634 München (DE)**

(56) Entgegenhaltungen:
**EP-A- 0 322 680     EP-A- 1 073 261**
**US-A- 5 131 058**

**Beschreibung**

Die Erfindung betrifft ein Verfahren, ein Computerprogramm, einen Computer und ein Drucksystem zum Trapping von Bilddaten.

Farbige Dokumente oder Dokumententeile, wie z. B. Bilder, Farbgrafiken oder ähnliches, werden meist durch Bilddaten beschrieben, die in Farbauszüge gegliedert sind. Diese Art der Datengliederung entspricht wiederum vielen Druckausgabeverfahren bzw. -geräten, die die Bilddaten in Farbauszügen auf einen Aufzeichnungsträger drucken, z.B. in den Farben Gelb (Y), Magenta (M), Cyan (C) und Schwarz (K) oder in Schwarz und einer oder mehreren sogenannten Highlight Color Farben oder den Océ Custom Tone® Farben.

Die Anmelderin entwickelt und vertreibt entsprechende digitale elektrografische Drucksysteme. Sie sind z.B. in der Veröffentlichung "The World of Printers, Technologies of Océ Printing Systems", Dr. Gerd Goldmann (Hsg.), Océ Printing Systems GmbH, Poing, Ed. 7 (2002) beschrieben. Auf Seiten 249-286 sind verschiedene Offset- und Digital-Drucktechnologien beschrieben, auf Seiten 287-325 sind verschiedene digitale Farbdrucksysteme beschrieben und auf Seiten 233-248 sind Grundlagen des Farbdruckens beschrieben. Auf Seiten 209-232 sind Grundlagen digitaler Bildverarbeitung beschrieben. Auf den Seiten 246-248 sind Prinzipien des Highlight Color Printing beschrieben.

Aus der WO 98/39691 A1 ist ein digitales Drucksystem zum beidseitigen monochromen und/oder farbigen Bedrucken eines Aufzeichnungsträgers bekannt. Aus der internationalen Patentanmeldung Nr. PCT/EP2004/00700 (Veröffentlichungsnummer WO 2005/001765 A2) ist ein Verfahren zum Aufbereiten einer Bildpunktdatei bekannt, bei dem aus den Bildpunkten zusammenhängende Gebiete des Bildes ermittelt werden.

Aus der US-A-5,581,667, der EP-A2-484 890, US 2003/0090689 A1, US-A-4,931,861, EP-A2-929 189, DE-A1-199 12 511, US 2001/0055130 A1 und der EP-A2-833 216 sind Verfahren zum Trapping von Bilddaten bekannt.

Aus dem Dokument EP 0 322 680 ist ein Verfahren zum Trapping bekannt, bei dem Farbauszüge von Bilddaten erstellt und auf Basis dieser Farbauszüge und unter Berücksichtigung von benachbarten Objekten Formveränderungen der Objekte durchgeführt werden.

Sowohl beim digitalen Druck als auch beim Offset-Druck gibt es das sogenannte Passer-Problem. Dabei handelt es sich darum, dass bei mehreren Druckvorgängen auf einem Blatt Papier aufgrund mechanischer Toleranzen nicht garantiert werden kann, dass die Positionierung des Papiers bei allen Druckvorgängen immer exakt gleich ist. Das Problem tritt auf bei einfarbigem Druck, wenn Vorder- und Rückseite getrennt bedruckt wird oder bei mehrfarbigem Druck auf einer Seite.

Beim Vorder- und Rückseitendruck stört dieses Problem, wenn z.B. ein Rahmen je um die Vorder- und Rückseiten gedruckt wird und diese Rahmen nicht exakt aufeinander liegen, was man bemerkt, wenn man die Seite gegen das Licht hält.

Beim Mehrfarbendruck sind die Farben relativ zueinander versetzt. Solange sich die unterschiedlichen Farben nicht berühren fällt dies nicht weiter auf. Berühren sich die Farben, so werden durch den Versatz die Farben an der Berührungslinie übereinander gedruckt, was zu einer Verfälschung des Farbeindrucks führt, oder es bleibt ein weißer Spalt (Blitzer) an der Berührungslinie.

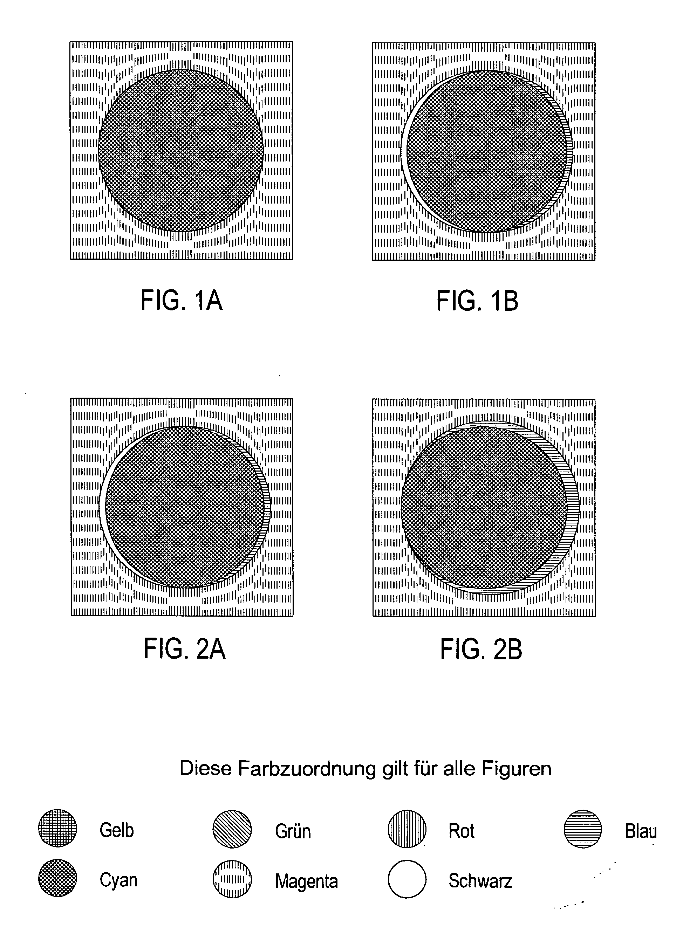

Während die Verfälschung des Farbeindrucks meist noch tolerierbar ist, sind die Blitzer äußerst auffallend, wie durch die Gegenüberstellung exakt positionierter Farben in Fig. 1A und versetzt positionierter Farben in Figur 1B gezeigt ist.

Zur Behebung des Blitzer-Problems ist es bekannt, die hellere Farbe zu vergrößern bzw. räumlich zu überfüllen. Damit erhält man zwar eine größere Überdeckung der Farben, aber die Blitzer verschwinden, wie durch die Gegenüberstellung von versetzt positionierten Farben in Fig. 2A und überdeckten Farben in Fig. 2B gezeigt ist. Bei der Vergrößerung eines Objekts muss im späteren Druckvorgang dafür Sorge getragen werden, dass der überdeckende Teil transparent gedruckt wird, da sich sonst das Problem auf den Rand des vergrößerten Objekts verlagert.

Das soeben beschriebene Verfahren, das dieses Problem behebt, hat den Namen "Trapping" (Überfüllung). Trapping wird in unterschiedlichen Produkten am Markt angeboten. Es ist z.B. Bestandteil von Raster Image Prozessoren (RIPs) der Seitenbeschreibungssprache (page description language, PDL) Adobe PostScript® Level 3, der von der Firma Heidelberger Druckmaschinen AG angebotenen Software SuperTrap® oder der Software TrapWise®, die von der Fa. Creo angeboten wird.

Trapping kann auf zwei verschieden Arten durchgeführt werden. Man kann Trapping auf Objektebene behandeln oder auf Bitmapebene.

Die vorliegende Erfindung betrifft insbesondere die Problematik des Trapping auf BitmapEbene unter Performancegesichtspunkten, die insbesondere bei hohem Druckvolumen und komplexen Vorlagen für einen reibungslosen und effizienten Ablauf eines Druckvorgangs relevant sind.

Die Erfindung betrifft auch ein Trapping-Verfahren für sogenannte Highlight Color Bilder oder abgekürzt HLC-Bilder. Derartige Bilder definieren Farben in einem für sie spezifischen Farbraum, bei dem zumindest eine Farbe einen speziellen Farbton umfasst, der in der Regel abseits von denen üblicher Farbstoffe liegt. Dieser Farbton kann z.B. ein anwendungsspezifischer Farbton sein (z.B. für ein farbiges Firmenlogo) und/oder derart angepasst sein, dass er Zugang zu Farbtönen erlaubt, die mit Standard-Druckfarben wie z.B. gelb (Y), magenta (M), cyan (C) und schwarz (K) nicht erreichbar ist. Die Anmelderin vertreibt z.B. derartige Highlight Color Toner für elektrografische Drucker unter dem Handelsnamen Océ Custom Tone®.

Beim Highlight Color-Druck kann auch eine Standardfarbe und eine HLC-Farbe in unterschiedlichen Helligkeitsstufen bzw. Farbsättigungswerten gedruckt werden. In der Regel ist die Standardfarbe schwarz und wird in unterschiedlichen Graustufen gedruckt.

Der Highlight-Color-Druck ist kostengünstiger als ein Vollfarbdruck mit vier Grundfarben (sog. Vier-Farbdruck), bei dem durch den Übereinanderdruck von den Grundfarben cyan, magenta, gelb und schwarz verschiedenste Farben erreicht werden können. Bei dem VierFarbdruck ist nachteilig, dass die Leuchtkraft der Farben, die gedruckt werden können, trotz der Farbenvielfalt beschränkt ist. Vor allem in den Bereichen rot, grün und blau kann im Vierfarbdruck-Verfahren oftmals eine von einem Kunden geforderte Leuchtkraft und damit eine kundenspezifische Spezialfarbe häufig nicht erreicht werden.

Da oftmals lediglich eine spezielle Farbe gewünscht wird, ist es für derartige Anwendungen wesentlich sinnvoller spezielle Druckfarben zu verwenden, die die gewünschte Farbe aufweisen, wenn sie vollflächig auf das Papier gedruckt werden.

Stoßen zwei verschiedene Farben auf einer Seite aneinander, so kann es durch ungenaue Positionierung der verschiedenen Farbauszüge (Passer) zu Überlagerung der Farben kommen, was zu dunklen Rändern führt, oder zu einer Lücke zwischen den Farben, was zu den bereits o.g. weißen Zwischenräumen (Blitzer) führt. Während dunkle Ränder in der Regel noch tolerierbar sind, machen sich Blitzer äußerst störend bemerkbar.

Beim Trapping wird das zu einer der beiden beteiligten Farben gehörende Objekt um einen oder mehrere Pixel vergrößert. In der Regel ist eine der beteiligten Farben heller als die andere. Vergrößert man das Objekt mit der dunkleren Farbe, entsteht ein definitiv größeres Objekt, was sich ebenfalls als störend bemerkbar machen kann. Vergrößert man das Objekt der helleren Farbe kommt es nicht zu solch einer optischen Vergrößerung, da das Objekt durch die dunklere Farbe des anderen Objekts überdeckt wird. Aus diesem Grund werden also in der Regel nur die helleren Objekte vergrößert.

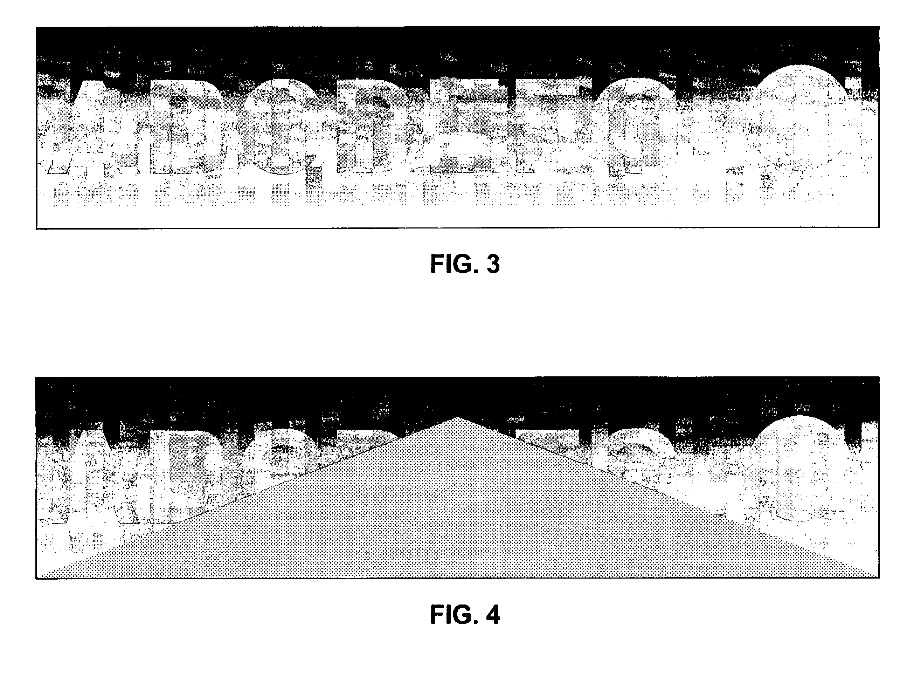

In der Praxis ist das Problem jedoch wesentlich komplexer. Bei Farben gleicher Helligkeit bzw. Luminanz bleibt das Problem der Wahl, welches Objekt vergrößert werden soll bestehen und gerade in solchen Fällen kommt es meist bei der Überlappung zu Farbveränderungen. Auch ist nicht sichergestellt, dass ein Objekt an jeder Stelle immer die gleiche Farbe hat, sondern es kann auch einen Farbverlauf haben, so dass an einer Stelle das Objekt heller ist, als das Nachbarobjekt und an einer anderen Stelle dunkler, wie in Fig. 3 dargestellt,

Das Beispiel der Figur 3 zeigt, dass die Buchstaben am oberen Rand heller und am unteren Rand dunkler sind, als der Hintergrund. In diesem Fall müsste man die Buchstaben im oberen Bereich vergrößern, während man im unteren Bereich den Hintergrund vergrößern müsste. Nimmt man die Buchstaben als Text (nicht als Bitmap) so bedeutet dies, dass man einen neuen Font benötigt, in dem alle Buchstaben nur im oberen Bereich vergrößert sind.

Will man also auf Objekt-Ebene Trapping durchführen, so kann man keine Standardobjekte mehr verwenden, sondern muss z.B. neue Fonts definieren, oder aber neue geometrische Figuren, wie z.B. wenn aus einem Kreis ein nur in der oberen Hälfte vergrößerter Kreis wird. Damit wird sich dann die Anzahl der verwendeten verschiedenen Objekte gravierend erhöhen, insbesondere, wenn sich weitere Objekte überlagern, wie in Fig. 4 dargestellt.

Gerade bei vielen Überlagerungen hängen die Veränderungen der zuerst platzierten Objekte von später platzierten Objekten ab. Damit müssen Objekte ggf. häufig verarbeitet werden.

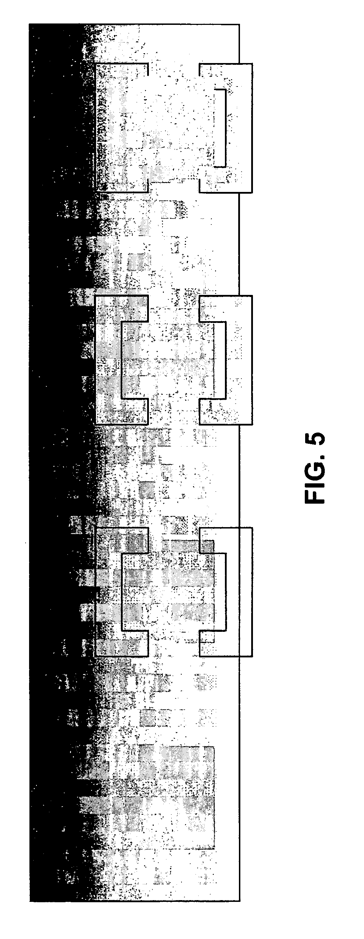

Statt der Veränderung bestehender Objekte lassen sich auch zusätzliche Trapping-Objekte definieren, die gerade den Vergrößerungen an den Konturen der Objekte entsprechen wie in Figur 5 dargestellt.

Da man solche Zusatzobjekte an allen Grenzlinien benötigt, insbesondere auch bei Text, führt dies wieder zu einer enormen Zunahme von Objekten, die zudem noch ggf. wegen komplexer Kurvenführung oder durch Beschreibung von Farb-Verläufen äußerst kompliziert werden können.

Darüber hinaus bedeutet Trapping nicht nur Überfüllung, sondern kann auch Unterfüllung bedeuten. So werden z.B. große schwarze Flächen meist nicht nur auf reines Schwarz abgebildet, sondern zusätzlich mit einem Raster einer andern Farbe z.B. Cyan. Typischerweise geschieht dies beim Colormanagement. Wird dann weißer Text auf die schwarze Fläche gedruckt, können die Cyanpunkte in den weißen Bereich ragen, so dass man solch ein Cyan-Raster (nicht die schwarze Fläche) an den Rändern verkleinern muss. Da das CMM im Drucker nur auf das Profile reagiert und immer entsprechend der tatsächlichen Größe die Fläche mit allen angegebenen Farben füllt, müssen hier zusätzliche weiße Konturenobjekte an den Rändern eingefügt werden, die nur auf die Cyan-Plane und nicht auf die anderen Planes wirken. Ein Trapping-Tool muss also insbesondere die verwendete Profile kennen, auswerten und entsprechende neue Objekte erzeugen. Insgesamt führt ein Trapping auf Objektebene zu einer sehr komplexen Verarbeitung und zu einer unüberschaubaren Vergrößerung der Objektanzahl, teilweise mit neuen Eigenschaften.

Wesentlich einfacher gestaltet sich Trapping auf Bitmapebene. Werden die Objekte nacheinander auf den Hintergrund gemappt, kann man sofort jedes Randpixel des aktuellen Objekts mit dem aktuellen Hintergrund vergleichen und so einfach entscheiden, an welchen Stellen das Objekt und an welcher Stelle der Hintergrund zu vergrößern ist.

Es ist Aufgabe der Erfindung, das Trapping von Bilddaten zu vereinfachen, insbesondere Bitmap-Trapping.

1.1

Die soeben genannte Aufgabe wird durch die in den unabhängigen Ansprüchen angegebene Erfindung gelöst. Vorteilhafte Weiterbildungen der Erfindung sind in den Unteransprüchen angegeben.

Erfindungsgemäß werden in einem Verfahren zum Trapping von Bilddaten die Bilddaten in einem Ausgangsbild bildpunktweise als Farbauszugsdaten, insbesondere als Plane- Bitmaps und/oder als punktweise Grundfarbendaten, bereitgestellt und die Bilddaten verarbeitet.

Gemäß einem ersten Aspekt der Erfindung werden um Bildpunkte bzw. Pixel verschiedener Farbauszüge des Ausgangsbildes nach einer Objektvorschrift Objekte mit benachbarten Zusatzbildpunkten erzeugt, wodurch erweiterte Farbauszugsdaten entstehen. Die benachbarten Zusatzbildpunkte eines Farbauszuges werden dann bildpunktweise mit den entsprechenden Bildpunkten des Ausgangsbildes verglichen und zusatzbildpunktweise in Abhängigkeit von den Bilddaten des entsprechenden Bildpunkts des Ausgangsbildes eine Entscheidung getroffen, ob entsprechende Farbauszugsdaten des Ausgangsbild-Bildpunktes zur Erzeugung eines Zielbildpunktwertes um einen dem Zusatzbildpunkt entsprechenden Wert erweitert wird.

Gemäß einem zweiten Aspekt der Erfindung, der unabhängig oder auch in Kombination mit dem ersten Aspekt gesehen werden kann, werden um Bildpunkte verschiedener Farbauszüge des Ausgangsbildes nach einer Objektvorschrift Objekte mit benachbarten Zusatzbildpunkten erzeugt, wodurch erweiterte Farbauszugsdaten entstehen. Die benachbarten Zusatzbildpunkte eines Farbauszuges werden dann bildpunktweise mit den entsprechenden Bildpunkten des Ausgangsbildes verglichen und an der Koordinate des benachbarten Zusatzbildpunktes in Abhängigkeit von den Daten des entsprechenden Ausgangsbild-Bildpunktes eine Entscheidung getroffen, ob der Zusatzbildpunkt in dem vorliegenden Farbauszug gesetzt wird.

Gemäß einem weiteren Aspekt der Erfindung werden Maßnahmen angegeben, mit denen Highlight Color Daten wirkungsvoll getrappt werden können, insbesondere für Daten mit einer, zwei oder drei Highlight Color Farben, die insbesondere in Verbindung mit schwarz auftreten können.

Mit der Erfindung ist es insbesondere möglich, auf Basis von Bitmaps ein Trapping durchzuführen. Ein bevorzugtes Ausführungsbeispiel analysiert die Bitmaps dabei derart, dass zusammenhängende Gebiete ermittelbar und als Bildobjekte identifizierbar sind. Demgemäß setzt die Erfindung zwar bei eingehenden Bitmapdaten an, kann aber nach der Erkennung der Bildobjekte Maßnahmen ergreifen, die aus objektbasierten Trappingverfahren bekannt sind.

Gemäß einem vorteilhaften Ausführungsbeispiel der Erfindung werden zu Anfang Farbauszüge der Farben Gelb (Y), Magenta (M), Cyan (C) und Schwarz (K) bereitgestellt und die Bilddaten der Farben Gelb, Magenta und Cyan in einen Farbraum der Farben Gelb (Y'), Magenta (M'), Cyan (C'), Rot (R'), Grün (G') und Blau (B') transformiert. Die Transformation kann dabei insbesondere nach folgenden Regeln erfolgen:

$$C' \quad = C \ \& \ {\sim}M \ \& \ {\sim}Y \ \& \ {\sim}K \quad = C \ \& \ {\sim}(M \mid Y \mid K)$$

$$M' \quad = M \ \& \ {\sim}C \ \& \ {\sim}Y \ \& \ {\sim}K \quad = M \ \& \ {\sim}(C \mid Y \mid K)$$

$$Y' \quad = Y \ \& \ {\sim}C \ \& \ {\sim}M \ \& \ {\sim}K \quad = Y \ \& \ {\sim}(C \mid M \mid K)$$

$$R' \quad = M \ \& \ Y \ \& \ {\sim}C \ \& \ {\sim}K \quad = M \ \& \ Y \ \& \ {\sim}(C \mid K)$$

$$G' \quad = C \ \& \ Y \ \& \ {\sim}M \ \& \ {\sim}K \quad = C \ \& \ Y \ \& \ {\sim}(M \mid K)$$

$$B' \quad = C \ \& \ M \ \& \sim\!Y \ \& \sim\!K \quad = C \ \& \ M \ \& \sim\!(Y \mid K),$$

wobei

die großen Buchstaben jeweils eine Matrix der Bildpunkte der zugehörigen Farbauszüge mit dem entsprechenden Anfangsbuchstaben bezeichnen und K Schwarz bezeichnet.

In einer Weiterbildung der Erfindung werden aus den Bildpunkten der Farbauszüge Gelb, Magenta und Cyan Objekte mit benachbarten Zusatzpixeln erzeugt, aber nicht aus den Bildpunkten der Farbe schwarz.

Gemäß einer vorteilhaften Ausführungsform der Erfindung werden die transformierten Bilddaten in einem zweiten Schritt gemäß den Regeln

$$C'' = V(C'), \ M'' = V(M'), \ Y'' = V(Y'), \ R'' = V(R'), \ G'' = V(G'), \ B'' = V(B')$$

verarbeitet, wobei V eine Vorschrift für die Erzeugung der Objekte mit erweiterten Bildpunkten bezeichnet.

Die Vorschrift V zur Erzeugung der punktweise erweiterten Objekte kann insbesondere nach einer in der internationalen Patentanmeldung PCT/EP2004/007000 angegebenen Lehre ausgeführt werden. Sie gibt ein Verfahren zum Aufbereiten einer Bildpunktdatei an, in welcher gewisse Bildpunkte zur Darstellung von Grafik- und/oder Textinformationen gesetzt sind und umfasst folgende Schritte:

- Abbilden der Bildpunktdatei auf eine Abbildungsdatei, wobei alle Bildpunkte der Abbildungsdatei, die innerhalb eines vorbestimmten Abstandes d zu korrespondierenden Bildpunkten in der Bildpunktdatei liegen, gesetzt werden und

- Bestimmung aller zusammenhängenden Bereiche von in der Abbildungsdatei gesetzten Bildpunkten, wobei ein jeder solcher zusammenhängender Bereich ein Bildobjekt darstellt.

- Die Bildpunktdatei entspricht bei der vorliegenden Erfindung insbesondere der Datei, in der die Pixelwerte einer Plane gespeichert sind.

- Die Bildpunkte in der Bildpunktdatei und in der Abbildungsdatei sind insbesondere in Zeilen und Spalten angeordnet. In der PCT/EP2004/007000 sind zwei verschiedene Teilverfahren zum Bestimmen von Bildobjekten genannt, nämlich eine iterative Methode und eine besonders bevorzugte Methode, die auf dem Analysieren von Farbübergängen beruht. Dabei kann insbesondere eine Tabelle mit eindimensionalen Bildpunktmuster vorgesehen sein, wobei jedem Bildpunktmuster ein korrespondierendes Abbildungspunktmuster zugeordnet ist, wobei bei der Abbildung in Richtung der Zeilen Gruppen von Bildpunkten einer Zeile der Bildpunktdatei mit den Bildpunktmustern verglichen werden, und wobei das zum übereinstimmenden Bildpunktmuster korrespondierende Abbildungspunktmuster in die korrespondierende Zeile an die korrespondierende Position in der Abbildungsdatei mit einer Oderverknüpfung eingetragen wird. Der Abstand d kann insbesondere in Abhängigkeit der Schriftzeichengröße und/oder der Rasterung und/oder der Granularität automatisch variiert werden.

Das in der PCT/EP2004/007000 beschriebene Verfahren ist dort im Zusammenhang mit der Beseitigung von Bildfehlern, sogenannten Speckles, beim Scannen von Vorlagen beschrieben worden. Gemäß einem vorteilhaften Aspekt der vorliegenden Erfindung wurde erkannt, dass sich dieses Verfahren, insbesondere seine Regeln zur Erweiterung eines Bildpunktgebietes auch für die Regeln zum Bilden eines Objektes mit Zusatzbildpunkten aus einer Bitmap-Datei bei der vorliegenden Erfindung verwenden läßt. Zur Verdeutlichung dieses Aspektes wird nachfolgend die Textpassage von Seite 14, Zeilen 1 bis 26, wiedergegeben:

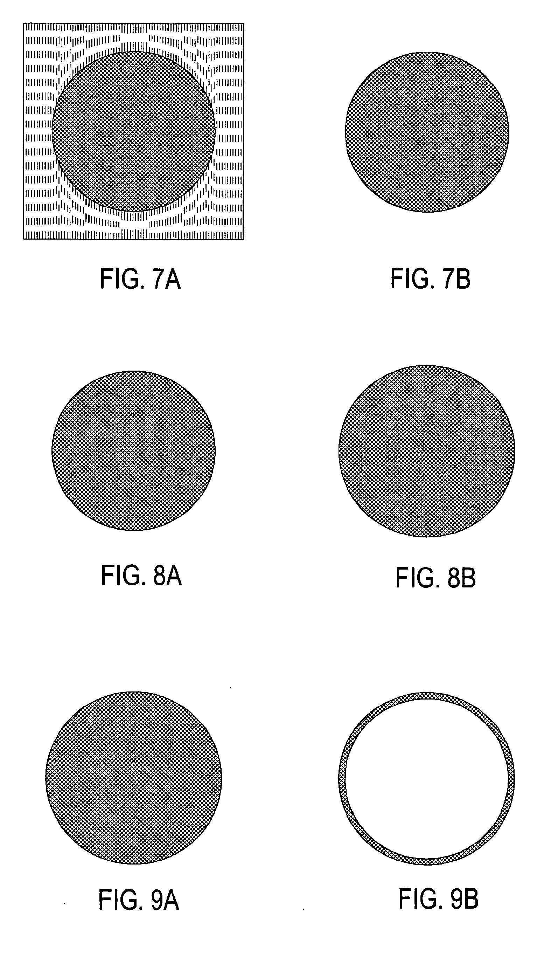

*"Das Erweitern der Originalbildpunkte durch Erweiterungsbildpunkte in Spaltenrichtung (Figur 2a, 2b, Figur 8a, 8b) wird bei einer Abbildungsdatei, bei welcher die Bildpunkte in Zeilen und Spalten angeordnet sind, vorzugsweise durch eine Oder-Verknüpfung benachbarter Zeilen ausgeführt. Mit einer solchen Oder-Verknüpfung wird ein gesetzter Originalbildpunkt in Spaltenrichtung auf eine benachbarte Zeile abgebildet. Um in Spaltenrichtung in dem durch den Abstand d begrenzten Bereich um ein Originalbildpunkt die entsprechenden Erweiterungsbildpunkte zu setzen, wird die Oder-Verknüpfung auf alle Zeilen ober- und unterhalb dieses Bereiches ausgeführt.*

*Zur einfachen und schnellen Erweiterung der Originalpunkte durch Erweiterungsbildpunkte in Zeilenrichtung wird vorzugsweise eine Tabelle mit eindimensionalen Bildpunktmustern verwendet. In dieser Tabelle ist jedem Bildpunktmuster ein korrespondierendes Abbildungspunktmuster zugeordnet. Bei der Erweiterungsabbildung werden in Richtung einer Zeile Gruppen von Bildpunkten der Zeile der Bildpunktdatei ausgelesen und mit den Bildpunktmustern verglichen. Das zum übereinstimmenden Bildpunktmuster korrespondierende Abbildungspunktmuster wird in der korrespondierenden Zeile an die korrespondierende Position in der Abbildungsdatei mit einer OderVerknüpfung eingetragen. Hierdurch können ganze Gruppen von Bildpunkten der Bildpunktdatei schnell und einfach auf erweiterte Bildpunkte der Abbildungsdatei abgebildet werden. "*

Gemäß einem weiteren vorteilhaften Aspekt der vorliegenden Erfindung werden für die Entscheidung, ob entsprechende Farbauszugsdaten des Ausgangsbild-Bildpunktes zur Erzeugung eines Zielbildpunktwertes um einen dem Zusatzbildpunkt entsprechenden Wert erweitert wird, folgende Regeln verwendet:

$$C''' = (M \mid K) \ \& \ C'', \qquad\qquad M''' = K \ \& \ M'',$$

$$Y''' = (C \mid M \mid K) \ \& \ Y'' \qquad\qquad R''' = ((M \ \& \ C) \mid K) \ \& \ R'',$$

$$G''' = (M \mid K) \ \& \ G'' \qquad\qquad B' = K \ \& \ B''.$$

Weiterhin können bildpunktweise Zwischen-Bilddaten aus den Bilddaten der Ausgangsbildpunkte und der Zusatzbildpunkte ermittelt werden. Die Zwischen-Bilddaten können insbesondere nach folgenden Regeln ermittelt werden:

$$C'''' = C''' \mid C', \qquad\qquad M'''' = M''' \mid M',$$

$$Y'''' = Y''' \mid Y', \qquad\qquad R'''' = R''' \mid R',$$

$$G'''' = G''' \mid G', \qquad\qquad B'''' = B''' \mid B'$$

Die Zielbilddaten werden insbesondere aus den Zwischenbilddaten berechnet und weiterhin insbesondere gemäß den Regeln

$$C''''' = C'''' \mid G'''' \mid B'''',$$

$$M''''' = M'''' \mid R'''' \mid B'''',$$

$$Y''''' = Y'''' \mid R'''' \mid G''''.$$

Die Bilddaten sind vorzugsweise bildpunktweise binär bzw. als bilevel- bzw. als zweistufige Daten ausgebildet, können aber auch bildpunktweise mehr als zweistufig bzw. als Multilevel-Daten ausgebildet sein.

Gemäß einem weiteren vorteilhaften Aspekt der Erfindung wurde erkannt, dass das erfindungsgemäße Trapping für eine Dokumentenseite computertechnisch besonders einfach und somit zumindest teilweise automatisch zu bewerkstelligen ist, wenn bereits die komplette Seite aufgerastert ist, insbesondere, wenn das Trapping datentechnisch an Bitmaps durchgeführt wird und damit die Farbauszüge, insbesondere die CMYK-Planes vollständig bekannt sind; denn dann kann für jeden Punkt relativ leicht untersucht werden, ob ein angrenzender Punkt heller oder dunkler ist und entsprechend der Nachbarpunkt eingefärbt wird oder nicht. Das Trapping wird demgemäß insbesondere an Bitmaps durchgeführt, wodurch beispielsweise auch die Datenverarbeitungsgeschwindigkeit hoch ist.

Die Erfindung kann insbesondere als Computerprogramm realisiert sein, das bei seinem Laden und Ablaufen auf einem Computer einen Verfahrensablauf nach einem der vorhergehenden Ansprüche bewirkt und/oder oder als Computer, auf dem ein solches Computerprogramm geladen ist. Weiterhin ist die Erfindung als Drucksystem mit einem solchen Computer realisierbar. Der Computer kann dabei insbesondere als Rasterbildprozessor (raster image processor, RIP) ausgebildet sein.

Nachfolgend werden Ausführungsbeispiele der Erfindung beschrieben, aus denen weitere Wirkungen und Vorteile der Erfindung deutlich werden. Beigefügte Figuren veranschaulichen die Ausführungsbeispiele.

Wie weiter oben bereits erwähnt läßt sich Trapping grundsätzlich unterschiedlich realisieren. Grundsätzlich ist zu unterscheiden, ob auf Objekt- oder Bitmap-Ebene zu trappen ist.

Auf Objektebene geschieht das Trapping vor dem Rippen. Es werden die bestehenden Objekte verändert, oder neue Objekte an den Kanten der bestehenden Objekte hinzugefügt. Neue Objekte werden abhängig von den Original-Objekten gefärbt und gemappt.

Auf Bitmapebene geschieht das Trapping insbesondere nach dem Rippen und Separieren und ggf. auch nach dem Screenen. Die bestehenden Objekte werden dabei durch den Ripping-Prozess vollständig aufgerastert, so dass nur noch eine einzige Bitmap für eine Seite übrig bleibt. Alle Überdeckungen sind dabei bereits berücksichtigt, so dass auf der Bitmap nur noch die endgültigen Farbübergänge sichtbar sind. Das Trapping muss sich nun um die komplette Bitmap kümmern und dabei Farbübergänge ohne Kenntnis der Objekte herausfinden und entsprechend der Originalfarben die Farben der Bitmap in den separierten Farbauszügen in der Nähe der Farbübergänge verändern. Das Trapping kann aber auch unabhängig von einem Rippen, Separieren oder Screenen an Bitmap-Objekten eines PDL-Datenstroms erfolgen, die in den Datenstrom integriert sind, z.B. an screen shots, Grafiken oder auch Fotos mit scharfen Farbübergängen.

Methoden

Trapping Methoden:

- Objekt-Trapping

  - Veränderung der Objekte

  - Hinzufügen von Objekten

- Bitmap-Trapping

  - Nach dem Separieren

  - Nach dem Screening

    - Multilevel

    - Bilevel

Objekt-Trapping

Beim Trapping von Objekten gibt es einige Vorteile, aber auch Nachteile.

Grenzen zwei Objekte aneinander, so sind alle Punkte der Grenzlinie bzgl. der Farbunterschiede zu betrachten. Überlappen sich die Objekte opaque, so sind alle Punkte der Randlinie des oberen Objektes bzgl. der Farbunterschiede zum darunter liegenden an dieser Linie zu betrachten. Überlappen sich die Objekte transparent, so hat auch die Transparenz Einfluss auf die sichtbaren Farben und damit auf das Trapping. Somit muss in diesem Fall zur Beurteilung wie das Trapping durchgeführt werden muss, bereits das obere Objekt transparent gemappt werden. Es müssen aber je nur zwei Objekte an ihrem Rand verglichen werden, was bei wenigen Objekten zu wesentlich weniger Aufwand führt, als beim Trapping von Bitmaps. Sind die Objekte noch bekannt, so kann man manuell entscheiden, wie das Trapping in kritischen Fällen durchgeführt werden soll, während bei Bitmaps solch eine individuelle Einstellung nicht möglich ist.

Allerdings können Objekte auch Bitmaps sein. Bitmaps werden beim Trapping von Objekten in der Regel nicht behandelt, obwohl auch hier ein Trapping notwendig werden kann. Zum Beispiel kann man alle verwendeten Objekte rippen und dann anstelle der Objekte die generierte Bitmap für das Dokument verwenden. Bei solchen Dokumenten ist das Trapping ebenfalls notwendig. Die Vorgehensweise, solche Dokumente prinzipiell nicht vor dem Trapping zu rippen ist nicht immer anwendbar, da man manchmal keinen Zugriff auf das tatsächliche Original hat (z.B. wenn eine Bitmap aus dem Internet stammt).

Trapping von Objekten erlaubt eine Bearbeitung abhängig vom Typ eines Objekts. So kann man generell Objekte vom Typ Character (Fonts) anders behandeln, als z.B. Objekte vom Typ Fläche oder Linie.

Beim Trapping von Objekten muss der Algorithmus die verwendete Syntax für die Objektbeschreibung kennen. Damit ist das Trapping stark abhängig von der verwendeten Eingangssprache.

Da sich prinzipiell zwei Objekte berühren oder überlagern können, müssen jeweils zwei Objekte auf einer Seite darauf untersucht werden. Die Anzahl der Untersuchungen entspricht dabei der Auswahl von 2 aus n Objekten, wobei n die Anzahl aller Objekte der Seite ist. Dies entspricht einer Anzahl von n * (n-1) / 2 Untersuchungen (quadratischer Aufwand mit n). Besonders bei Text sind die Anzahl der Zeichen sehr groß und liegen meist zwischen 2000 und 4000. Das entspricht 2 bis 8 Millionen Untersuchungen.

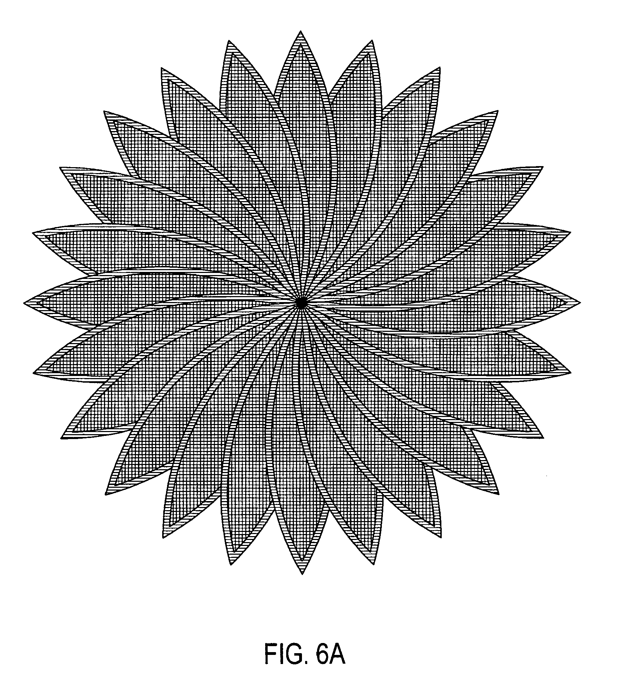

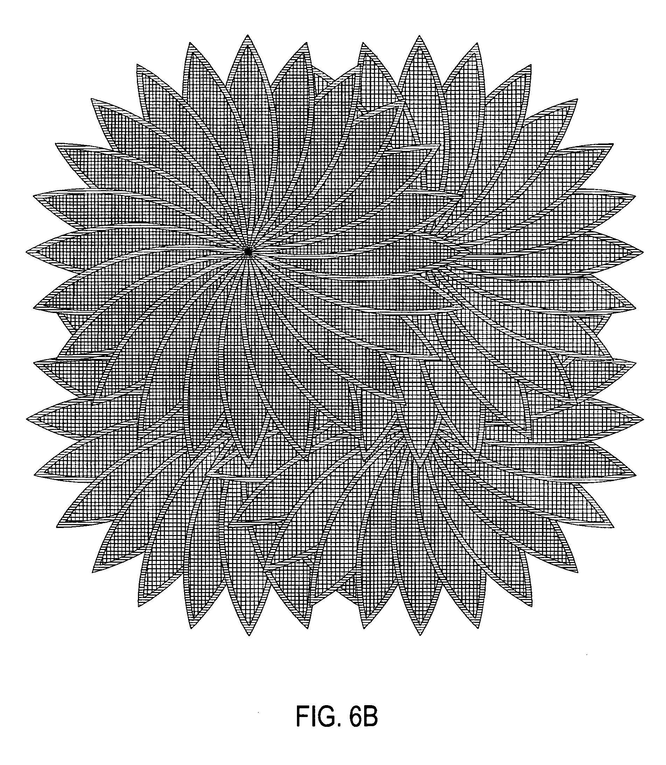

In der Regel überlappen sich Buchstaben nicht, aber man kann sich dessen nicht sicher sein, so dass solche Untersuchungen immer anfallen. Bei Grafiken kommt ein weiteres Problem hinzu. Ein Beispiel zeigt die in Figur 6A dargestellte Blume. Obwohl die Blume aus nur 24 gleichförmigen und gleichfarbigen Blättern besteht, ist aber jedes Blatt aus 4 Objekten aufgebaut, nämlich je zwei blaue Ränder verschiedener Krümmung und zwei gelbe Halbzentren. Dies führt dazu, dass 98 Objekte betrachtet werden müssen, was 4753 Untersuchungen entspricht. Verdoppelt man die Anzahl der Blätter so müssen bereits 19110 Untersuchungen durchgeführt werden. Betrachtet man nun nicht nur eine einzelne Blume, sondern einen Strauß von vier Blumen, wobei sich die Blumen jeweils überlagern (Figur 6B), so erhält man bei 24 Blättern 76636 Untersuchungen und bei 48 Blättern 294528 Untersuchungen. Dabei sind diese Untersuchungen auch dann fällig, wenn einzelne Objekte komplett überdeckt und nicht sichtbar sind.

Wegen der einfachen Handhabung bei der Erzeugung von solchen Gebilden in den Tools lassen sich heute schnell größere Objekte aus vielen Einzelobjekten aufbauen (Kopieren und Einfügen).

So führt eine Blumenwiese mit 100 Blumen bereits zu über 48 Millionen Untersuchungen oder bei 1000 Blumen zu mehr als 48 Milliarden Untersuchungen. Benutzt man die Methode des Hinzufügens von Objekten, können aus den 1000 Blumen (98000 Blättern) schnell zusätzliche 48 Milliarden Objekte werden, wenn man nicht die verdeckten Objekte eliminiert (was aber wieder zusätzlichen Aufwand bedeutet). Benutzt man die Methode der Veränderung der bestehenden helleren Objekte, fallen in diesem Fall keine weiteren Objekte an. Dafür besteht hier das Problem im Falle von sich überlagernden Zeichen (Character), dass getrappte halb überdeckte Zeichen in keinem Font vorhanden sind und somit solche Zeichen als Bitmap zu generieren sind oder eine Flut neu zu generierender Fonts erforderlich wird.

**Bitmap-Trapping**

Beim Trapping von Bitmaps gibt es ebenfalls Vorteile und Nachteile.

Da bei Bitmaps die Objekte nicht mehr bekannt sind, lassen sich nicht objektspezifische individuelle Trappingeigenschaften einstellen. Allenfalls kann man Bereiche einer Seite festlegen, die entsprechend anders behandelt werden sollen. Wegen des Aufwands, den ein manuelles Eingreifen in einen automatisierten Ablauf bedeutet, ist aber generell von objektspezifischen individuellen Einstellungen prinzipiell abzuraten.

Bei der Untersuchung einer Bitmap stellt die Bitmap das Resultat des Mappings der Objekte dar und es gibt kein Übereinander von Objekten mehr. Der Aufwand ist also zunächst einmal unabhängig von der Anzahl der Objekte.

Dafür muss jedes Pixel der Bitmap mit jedem benachbarten Pixel untersucht werden. Die Anzahl der zu betrachtenden Pixel hängt von der Auflösung der Bitmap ab. Bei 600 dpi sind das ca. 34,8 Millionen Pixel was ca. 139,2 Millionen Untersuchungen entspricht. Untersuchungen von Pixel sind in der Regel wesentlich einfacher als Untersuchungen von Objekten. Insbesondere läßt sich durch Ausnutzung der Breite von Registern der Aufwand für die Verarbeitung von Bitmaps erheblich reduzieren. Beim Trapping von Bitmaps werden eingelagerte Bilder automatisch mitgetrappt (Unterdrückung durch Angabe von Bereichen möglich). Bitmaps kommen in wenigen Formaten vor bzw. liegen nach dem Rippen und Separieren im Speicher als separierter Datenstrom vor. Eine Abhängigkeit von der Sprache liegt nicht vor. Benutzt man das Trapping vor dem Screening, so müssen in der Regel vier acht Bit tiefe Planes berücksichtigt werden, was einem Vergleich von 32 Bit entspricht. Hier kann man das Trapping noch abhängig von der Helligkeit der Farbe durchführen. Ein Pixel kann eine von 4 Mrd. Farbkombinationen der Farben C, M, Y und K haben. Benutzt man das Trapping nach dem Screening, so muss noch unterschieden werden, ob es sich um einen Bilevel- oder Multilevel-Drucker handelt. Bei einem Multilevel-Drucker müssen nur noch vier vier Bit tiefe Planes berücksichtigt werden. Das bedeutet eine Aufwandsreduzierung um den Faktor zwei. Hier ist nur noch ein Trapping in Abhängigkeit der Helligkeit der Grundfarben in den Multilevel-Stufen möglich. Ein Pixel kann nur noch eine von 64 K Farbkombinationen der Farben C, M, Y und K haben. Bei einem Bilevel-Drucker müssen nur noch vier ein Bit tiefe Planes berücksichtigt werden. Das bedeutet eine Aufwandsreduzierung um den Faktor acht. Hier ist nur noch ein Trapping in Abhängigkeit der Helligkeit der Grundfarben möglich. Ein Pixel kann nur noch eine von 16 Farbkombinationen der Farben C, M, Y und K haben. Ein Bitmap-Trapping sollte für eine bestimmte Planetiefe bei einer bestimmten Auflösung einen konstanten Aufwand haben (unabhängig von der Anzahl der Objekte und unabhängig vom Inhalt, sprich Farbübergänge).

**Verfahren**

Im Bilevel-Fall liegen bei Vollfarb-Daten die Eingangsdaten in vier ein Bit tiefen Planes vor. Für multiple Highlight Color (HLC) Daten läßt sich das Verfahren analog verwenden bzw. erweitern. Jedes Pixel kann nur eine der 24 = 16 Farben (Kombinationen der 4 Grundfarben Cyan, Magenta, Gelb und Schwarz) besitzen. Die Farbe jedes Pixels ist bei einem Ein-Bit-Trapping mit der Farbe jedes der benachbarten acht Pixel zu vergleichen und ggf. die Farbe zu verändern. Führt man solch ein Verfahren direkt wie beschrieben durch, so sind für eine DIN A4 Seite bei 600 dpi 4960 * 7015 = 34,8 Millionen Pixel jeweils mit den acht Nachbarn zu vergleichen. Da jeder Nachbar immer auch mit dem Original verglichen wird, werden alle Vergleiche doppelt durchgeführt, so dass man sich die Hälfte sparen kann indem man nur mit den rechten und den unteren Nachbarn vergleicht. Bei jedem Vergleich ist zu berücksichtigen, dass sowohl das zu vergleichende Pixel, als auch das Nachbar-Pixel eine von 16 Farben besitzen kann, also auf 256 Farbkombinationen zu prüfen sind. Ist bei einem Pixel der Wert in der schwarzen Plane und noch in mindestens einer weiteren Plane gesetzt, so wird das Ergebnis schwarz, so dass wir all diese Fälle genau so behandeln können, als wäre der Wert nur in der schwarzen Plane gesetzt. Damit halbiert sich die Anzahl der Farben auf 8, so dass nur noch 64 Farbkombinationen zu prüfen sind.

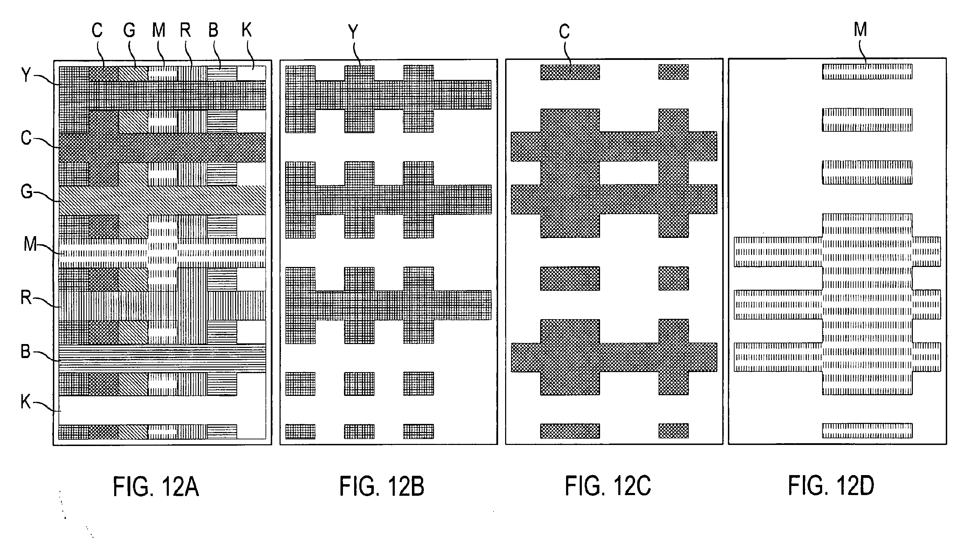

Selbst in solch einem einfachen Bilevel-Fall sind das so viele Operationen, dass eine Durchführung im Drucker nicht sinnvoll erscheint. Aus diesem Grund wird hier ein anderer Ansatz in 5 Schritten beschrieben. Für diesen wird weiter unten anhand der Figuren 12 bis 20 ein ausführliches Beispiel angegeben.

**Schritt 1: Filtern der reinen Grundfarben**

Zunächst interessieren wir uns für alle Pixel, die reine Grundfarben besitzen. Als Grundfarben bezeichnen wir hier die Farben Cyan, Magenta, Gelb, Rot, Grün und Blau. Schwarz und Weiß betrachten wir hier zunächst nicht als Grundfarbe.

Für Cyan sind dies alle Pixel, für die in der Cyan-Plane ein Bit gesetzt ist, in allen anderen Planes aber kein Bit gesetzt ist. Für Magenta und Gelb gilt das gleiche analog. Für Rot sind dies alle Pixel, für die in der Magenta-Plane und in der Gelb-Plane ein Bit gesetzt ist, in allen anderen Planes aber kein Bit gesetzt ist. Für Grün und Blau gilt das gleiche analog.

Wir können also aus den bestehenden vier Planes (C,M,Y,K) sechs weitere Planes (C',M',Y',R',G',B') erzeugen mit (~ bedeutet Negation, aus 0 wird 1 und aus 1 wird 0; | bedeutet ODER bzw. Vereinigung; & bedeutet UND bzw. Schnitt):

$$C' \quad = C \,\&\, \sim M \,\&\, \sim Y \,\&\, \sim K = C \,\&\, \sim(M \,|\, Y \,|\, K)$$

$$M' \quad = M \,\&\, \sim C \,\&\, \sim Y \,\&\, \sim K = M \,\&\, \sim(C \,|\, Y \,|\, K)$$

$$Y' \quad = Y \,\&\, \sim C \,\&\, \sim M \,\&\, \sim K = Y \,\&\, \sim(C \,|\, M \,|\, K)$$

$$R' \quad = M \,\&\, Y \,\&\, \sim C \,\&\, \sim K \quad = M \,\&\, Y \,\&\, \sim(C \,|\, K)$$

$$G' \quad = C \,\&\, Y \,\&\, \sim M \,\&\, \sim K \quad = C \,\&\, Y \,\&\, \sim(M \,|\, K)$$

$$B' \quad = C \, \& \, M \, \& \, \sim Y \, \& \, \sim K \quad = C \, \& \, M \, \& \, \sim(Y \mid K)$$

In diesen Planes kommen nur noch die reinen Grundfarben und keine Mischfarben vor. Jeder Bildpunkt bzw. jedes Pixel, das nicht nur schwarz (bzw. weiß) ist, wird demnach in diesen sechs Grundfarben (Planes) dargestellt. Die Pixeldaten erfahren eine entsprechende Bildtransformation. Fig. 7A und 7B veranschaulichen dies.

**Schritt 2: Vergrößerung**

In einem zweiten Schritt werden die Inhalte der Planes des ersten Schrittes zu Objekten mit Zusatzbildpunkten vergrößert. Dazu bedienen wir uns des Algorithmus bzw. des Verfahrens, die in der PCT/EP2004/007000 beschrieben sind, deren Inhalt hiermit an dieser Stelle nochmals explizit in Bezug genommen wird. Es können dabei zusammenhängende Objekte der Planes um bis zu 24 Pixel vergrößert werden. Für das Trapping-Problem werden allerdings nur ein, höchstens zwei Pixel Vergrößerung benötigt. Fig. 8A und 8B veranschaulichen dies.

$$C'' = V(C'), \qquad M'' = V(M'), \qquad Y'' = V(Y'), \qquad R'' = V(R'), \qquad G'' = V(G'), \qquad B'' = V(B')$$

**Schritt 3: Filtere Vergrößerung bei dunkleren Farben, die nicht die aktuelle Farbe enthalten**

Diese Vergrößerung wurde ohne Berücksichtigung der Nachbarpixel durchgeführt. Wir interessieren uns zunächst nur für die Pixel, die tatsächlich neu hinzukommen. Dies sind genau die Pixel, welche nicht die aktuelle Grundfarbe enthalten und die sich mit dunkleren Farben überlappen. Dazu müssen wir alle Grundfarben in der Reihenfolge ihrer Luminanz ordnen:

$$L(W) > L(Y) > L(C) > L(G) > L(M) > L(R) > L(B) > L(K)$$

Y ist die hellste Grundfarbe, also heller als C, G, M, R, B und K. Wegen R = M+Y, G = C+Y und B = M+C sind R, G und B bereits in den C, M, und Y Planes enthalten, d.h. ein Bildpunkt der Farben rot, grün oder blau ist jeweils vollständig mit Koordinaten in den Planes C, M und Y darstellbar. Y als aktuelle Farbe wird nicht berücksichtigt, weil nur die Vergrößerungen gegenüber dunkleren Farben betrachtet werden, so dass für den Schnitt nur noch C, M und K in Frage kommen. Damit werden also C, M und K verodert und mit Y" geschnitten um Y''' zu erhalten, wobei W=weiß und K=schwarz sind.

C ist die nächst dunklere Grundfarbe, also heller als G, M, R, B und K. C als aktuelle Farbe wird nicht berücksichtigt, so dass für den Schnitt nur noch M und K in Frage kommen. Damit werden also M und K verodert und mit C" geschnitten um C''' zu erhalten.

Im multilevel-Fall (mehr als 2 Helligkeitsstufen pro Bildpunkt in einer Plane) müssen die Helligkeiten entsprechend ihrer Farbe und ihrer Helligkeitsstufe sortiert werden, wobei es in der Helligkeit Überschneidungen zwischen verschiedenen Planes geben kann. Dies könnte für drei Helligkeitsstufen pro Bildpunkt und Plane z.B. so aussehen:

$$L(K_0) > L(Y_0) > L(Y_1) > L(Y_2) > L(C_0) > L(G_0) > L(M_0) > L(C_1) > L(G_1) > L(R_0) > L(M_1) > L(B_0) > ... > L(K_2)$$

Zurück zum bilevel-Fall: G ist die nächst dunklere Grundfarbe, also heller als M, R, B und K. G als aktuelle Farbe wird nicht berücksichtigt, so dass wegen G = C+Y für den Schnitt nur noch M und K in Frage kommen. Damit werden also M und K verodert und mit G" geschnitten um G''' zu erhalten.

M ist die nächst dunklere Grundfarbe, also heller als R, B und K. M als aktuelle Farbe wird nicht berücksichtigt, so dass für den Schnitt nur noch K in Frage kommen. Damit wird also K mit M" geschnitten, um M''' zu erhalten.

R ist die nächst dunklere Grundfarbe, also heller als B und K. R als aktuelle Farbe wird nicht berücksichtigt, so dass für den Schnitt nur noch B = M+C und K in Frage kommen. Damit werden also M und C geschnitten, mit K verodert und mit R" geschnitten, um R'" zu erhalten.

B ist die nächst dunklere Grundfarbe, also nur noch heller als K. B als aktuelle Farbe wird nicht berücksichtigt, so dass für den Schnitt nur noch K in Frage kommt. Damit wird K mit B" geschnitten, um B'" zu erhalten.

$$C''' = (M \mid K)\ \&\ C'', \qquad M''' = K\ \&\ M'', \qquad Y''' = (C \mid M \mid K)\ \&\ Y''$$

$$R''' = ((M\ \&\ C) \mid K)\ \&\ R'', \quad G''' = (M \mid K)\ \&\ G'', \qquad B' = K\ \&\ B''$$

Fig. 9A und 9B veranschaulichen diesen Schritt am Beispiel von Cyan.

**Schritt 4: Mischen mit reinen Original-Grundfarbe**

Es bleibt noch, zu den R'''-, G'''-,B'''-, C'''-, M'''- und Y'''-Planes jeweils die Original-Grundfarbe dazu zu mischen:

$$C'''' = C''' \mid C', \qquad M'''' = M''' \mid M', \qquad Y'''' = Y''' \mid Y',$$

$$R'''' = R''' \mid R', \qquad G'''' = G''' \mid G', \qquad B'''' = B''' \mid B'.$$

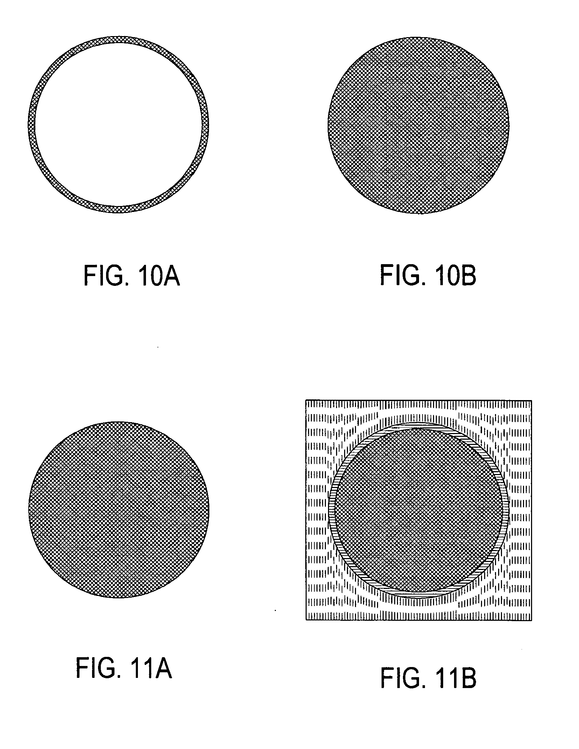

Fig. 10A und 10B veranschaulichen dies.

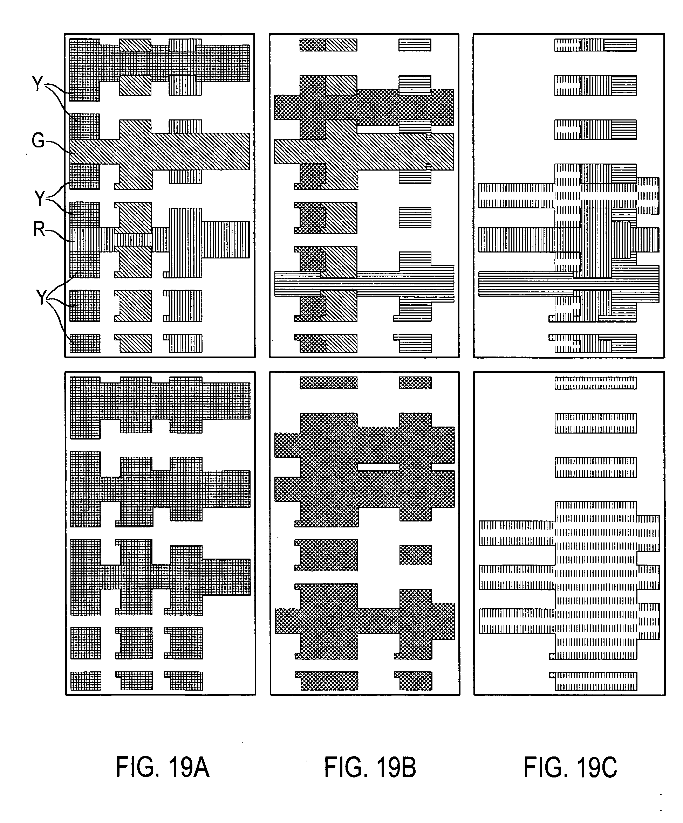

Für jede Grundfarbe werden die Schritte 1 bis 4 durchgeführt, siehe auch Fig. 19A bis 19C.

Schritt 5: Mischen mit Mischfarben

Zu diesen Planes müssen nun die ursprünglichen Werte der Mischfarben dazu gemischt werden.

$$C''''' = C'''' \mid G'''' \mid B'''', \qquad M''''' = M'''' \mid R'''' \mid B'''', \qquad Y''''' = Y'''' \mid R'''' \mid G''''.$$

Fig. 11A und 11B veranschaulichen dies.

Detail-Beispiel

Es wird ein Bild untersucht, in dem die Grundfarben in der Reihenfolge ihrer Luminanz Y, C, G, M, R, B, K in senkrechten und waagerechten Streifen (von oben nach unten bzw. von links nach rechts) vorkommen, so dass alle möglichen Farbübergänge zweimal auftreten. Fig. 12A zeigt original Bild, Fig. 12B den Farbauszug für Gelb, Fig. 12C den Farbauszug für Cyan und Fig. 12D den Farbauszug für Magenta.

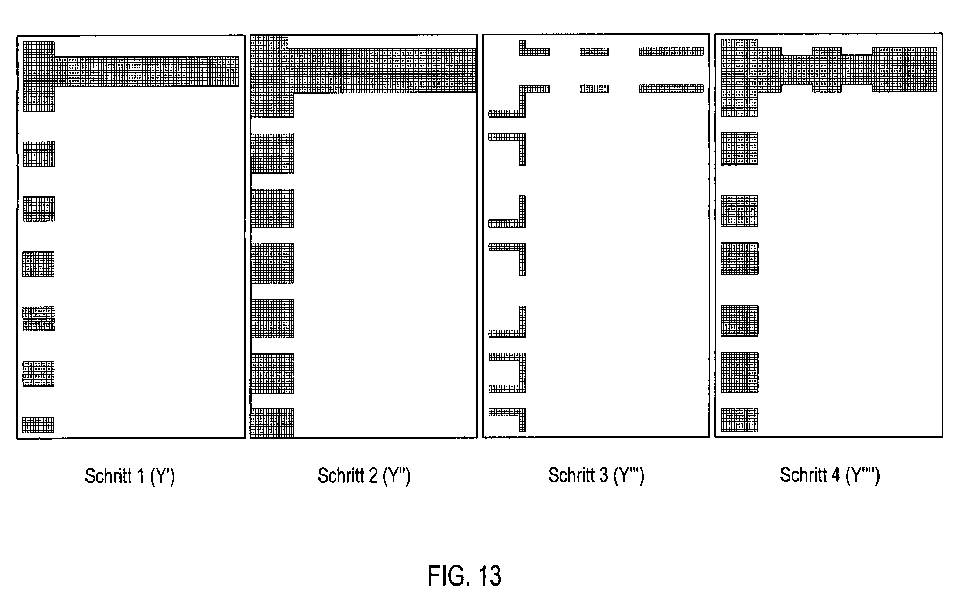

Fig. 13 zeigt für die gelbe Grundfarbe die einzelnen oben beschriebenen Schritte. Das Bild Schritt 1 zeigt die reinen gelben Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine gelbe Farbe.

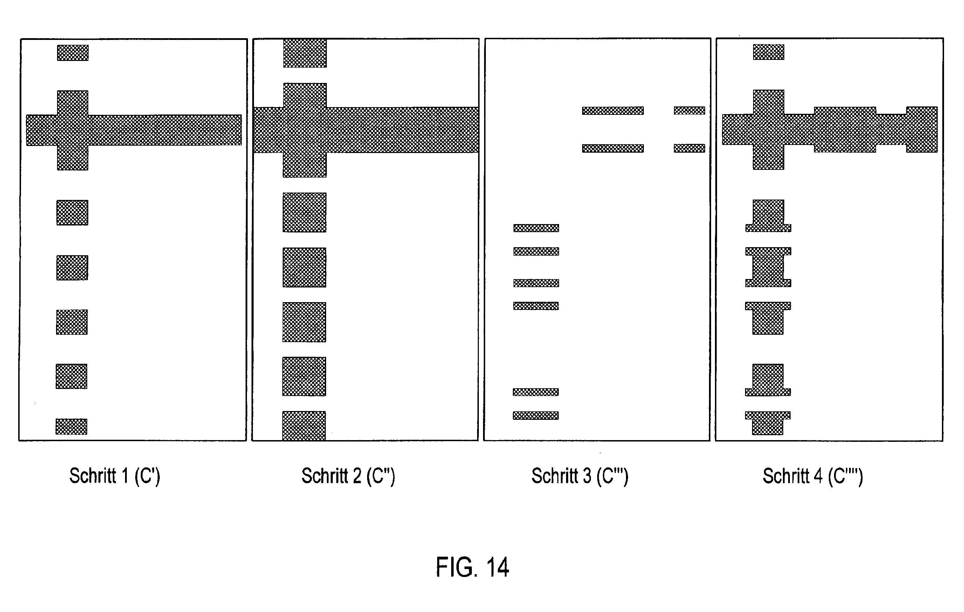

Fig. 14 zeigt für die cyan Grundfarbe die einzelnen Schritte. Das Bild Schritt 1 zeigt die reinen cyan Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine cyan Farbe.

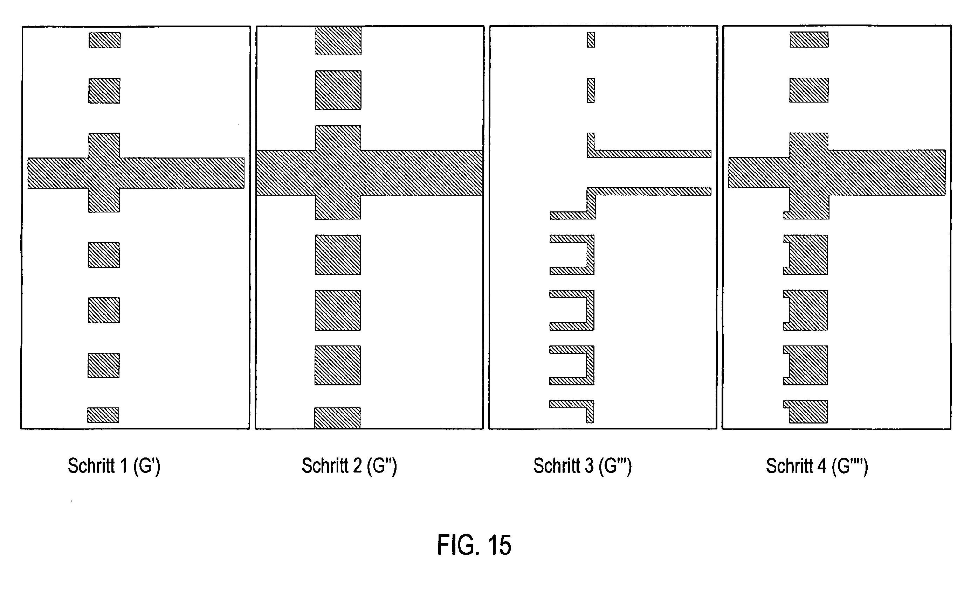

Fig. 15 zeigt für die grüne Grundfarbe die einzelnen Schritte. Das Bild Schritt 1 zeigt die reinen grünen Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine grüne Farbe.

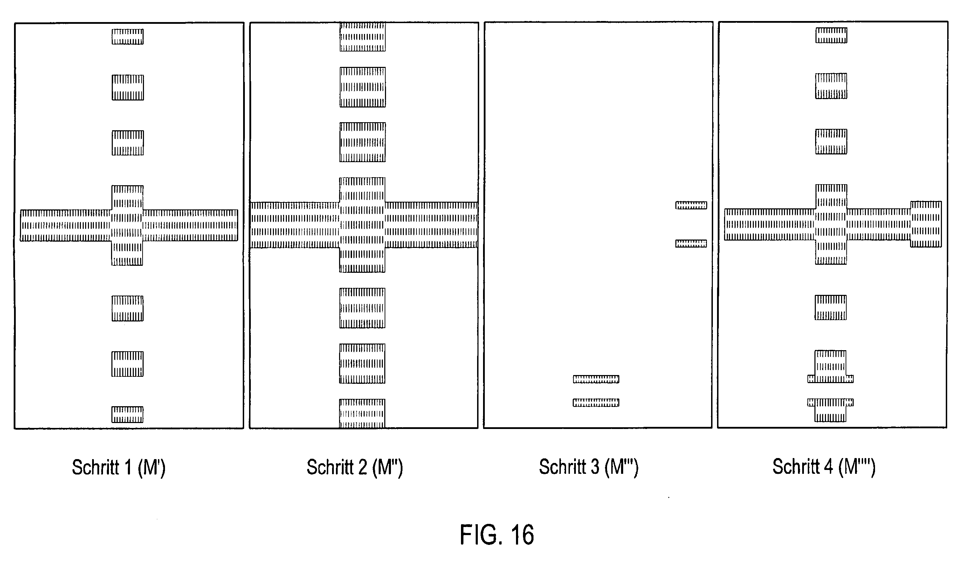

Fig. 16 zeigt für die magenta Grundfarbe die einzelnen Schritte. Das Bild Schritt 1 zeigt die reinen magenta Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine magenta Farbe.

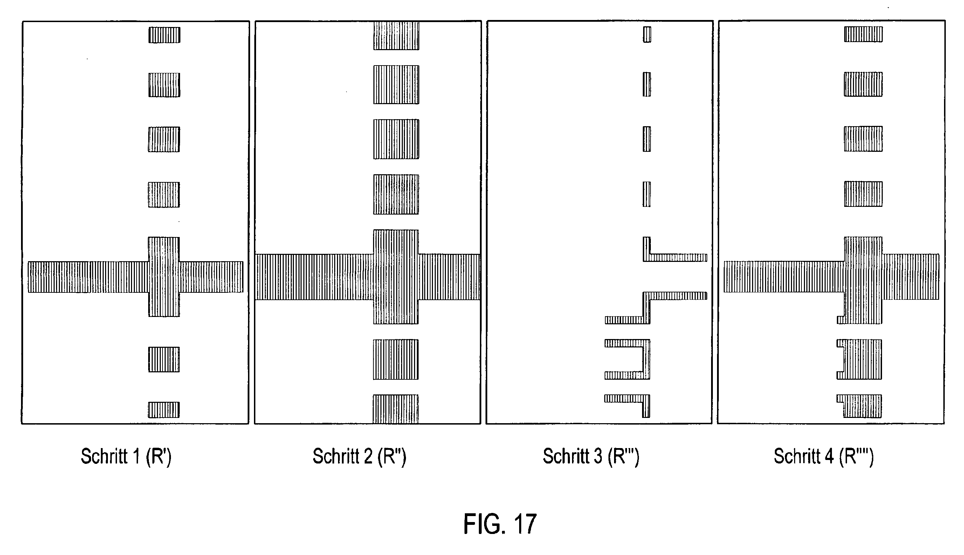

Fig. 17 zeigt für die rote Grundfarbe die einzelnen Schritte. Das Bild Schritt 1 zeigt die reinen roten Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine rote Farbe.

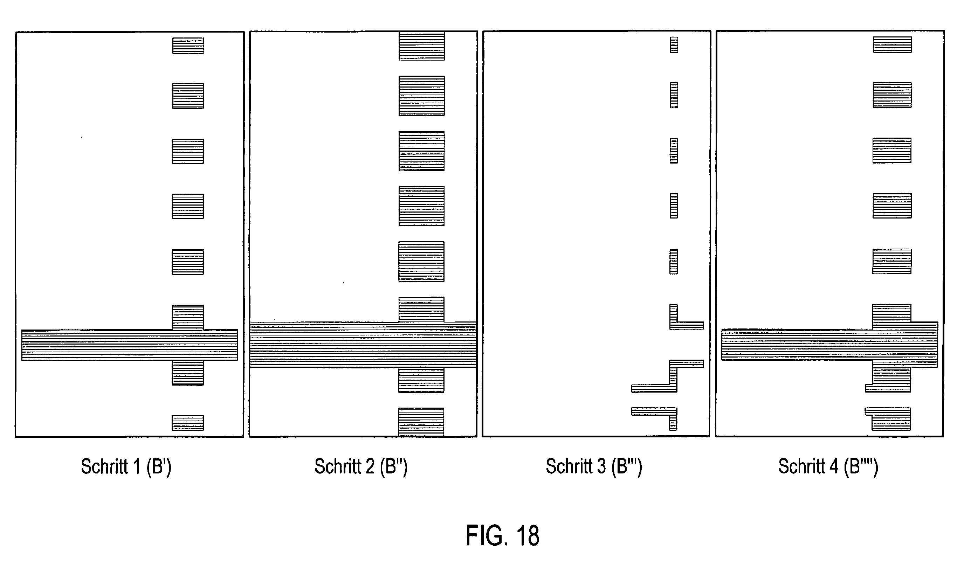

Fig. 18 zeigt für die blaue Grundfarbe die einzelnen Schritte. Das Bild Schritt 1 zeigt die reinen blauen Bereiche aus dem Original, Bild Schritt 2 zeigt die vergrößerten Bereiche, Bild Schritt 3 zeigt den Schnitt mit den dunkleren Farben und Bild Schritt 4 zeigt die dazu gemischte reine blaue Farbe.

Fig. 19A zeigt Schritt 5 für den gelben Farbauszug, Fig. 19B zeigt Schritt 5 für den cyan Farbauszug und Fig. 19C zeigt Schritt 5 für den magenta Farbauszug.

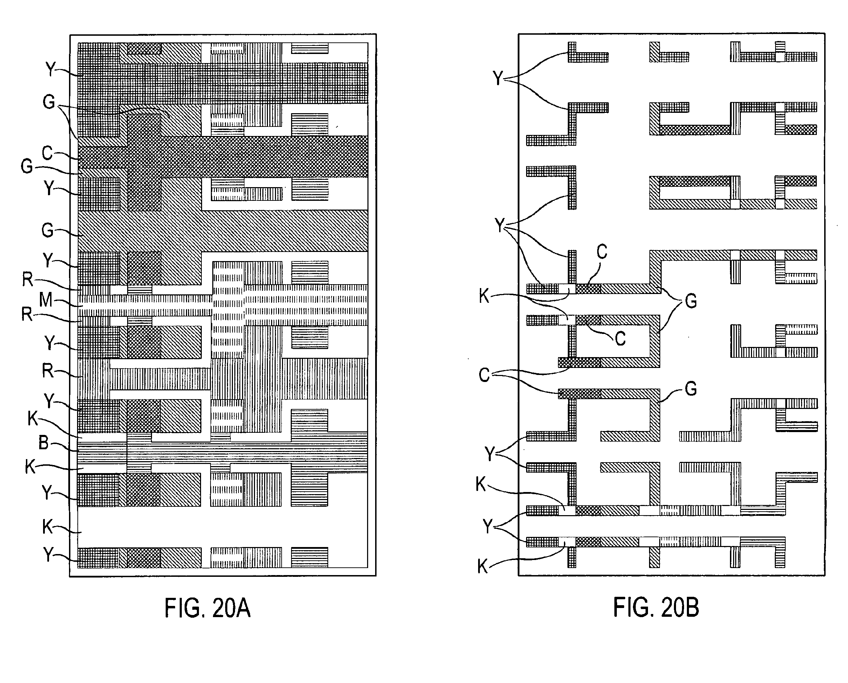

Werden diese drei Farbauszüge übereinander gelegt und noch mit der schwarzen Plane gedruckt, so überdecken sich einige Farben, die dann als Mischfarben meist schwarz auftreten. In der Fig. 20A ist das Ergebnis dargestellt. Fig. 20B zeigt die Anteile, die durch das Trapping hinzugekommen sind. Diese Anteile können sich bereits gegenseitig überlappen.

Die schwarze Plane wurde bei den beschriebenen Beispielen nicht geändert. Natürlich kann man in einem abgewandelten Verfahren soweit möglich zunächst CMYK in CMY (+$\Delta$K) umrechnen und danach wieder zu CMYK zurückkehren.

Die Operationen wurden der Verständlichkeit halber einzeln aufgeführt. Für eine Beschleunigung lassen sich aber Schritte zusammenfassen.

Oben wurde ein pixelbasiertes Trappingverfahren für Vollfarb-Bildpunktdaten (z.B. YMCK) beschrieben, die für jede Farbe jeweils in 2 Bits codiert sind (Bileveldaten). Das beschriebene Verfahren eignet sich aber auch für ein entsprechendes pixelbasiertes Trapping an sogenannten Highlight Color daten (HLC Daten) . Nachfolgend soll das Verfahren für HLC-Daten näher beschrieben werden.

Für das Bitmap-Trapping bei HLC Daten können wie beim Trapping für Vollfarbdaten grundsätzlich fünf Schritte vorgesehen werden:

Schritt 1 Filtern der reinen Grundfarben

Schritt 2 Vergrößerung

Schritt 3 Filtere Vergrößerung bei dunkleren Farben, die nicht die aktuelle Farbe enthalten

Schritt 4 Mischen mit reinen Original-Grundfarbe

Schritt 5 Mischen mit Mischfarben

Bei HLC-Daten ist es aber möglich, Mischfarben (z.B. R = M | Y) nicht zu berücksichtigen, so dass hier der Schritt 5 nicht notwendig ist.

**Highlight Color Bilder mit 2 Farben**

Wenn die Bilddaten zwei Farben beschreiben, z.B. schwarz K und eine Highlight Color Farbe H, so kann wie folgt vorgegangen werden:

Im Schritt 1 wird aus den zwei Planes (H,K) eine weitere Plane (H ') erzeugt, mit:

$$H' = H \mathbin{\&} {\sim}K$$

($\sim$ bedeutet Negation, aus 0 wird 1 und aus 1 wird 0)

In Schritt 2 wird der Inhalt dieser Plane vergrößert. Dazu kann wiederum das in der PCT/EP2004/007000 beschriebene Verfahren verwendet werden. Es können dabei zusammenhängende Objekte der Planes um z.B. bis zu 24 Pixel vergrößert werden. Für das Trapping-Problem werden allerdings nur wenige Pixel, z.B. höchstens ein bis drei Pixel Vergrößerung benötigt.

$$H'' = V(H')$$

In Schritt 3 wird die dunklere Farbe, hier also schwarz berücksichtigt. Es wird die reine Überdeckung ermittelt

$$H''' = K \,\&\, H''$$

In Schritt 4 wird die reine Überdeckung mit der originalen Highlight Farbe gemischt.

$$H'''' = H''' \mid H$$

Schritt 3 und 4 lassen sich wiederum als einen Schritt zu H'''' = (K & H'') | H zusammenfassen.

**Highlight Color Bilder mit 3 Farben**

Im Unterschied zur Behandlung von Vollfarben bzw. entsprechenden Daten, bei denen die Grundfarben C, M, Y, K bzw. R, G, B mit ihren Helligkeiten fest bestimmt sind, kann es sich bei HLC um Farben unterschiedlicher oder gleicher Helligkeiten handeln, die von Anwenung zu Anwenung, insbesondere von Druckgerät zu Druckgerät unterschiedlich sind. Deshalb wird in diesem Fall die Helligkeit der HLC-Farben bestimmt und dem Trapping-System von außen zugeführt, auf deren Basis es entscheidet, welche Farbe gegenüber welcher anderen Farbe getrappt werden. Haben beide HLC-Farben die gleiche Helligkeit (oder weichen in einem vordefinierten Toleranzbereich nur wenig von einander ab) so werden die Farben nicht mehr gegeneinander sondern jeweils nur gegen schwarz getrappt.

Wenn die beiden HLC-Farben mit H1 und H2 bezeichnet werden, dann sind zwei Fälle zu unterscheiden:

1. H1 □ H2. (Helligkeit von H1 ist gleich oder ungefähr gleich der Helligkeit von H2)

2. H1 < H2. (Helligkeit von H1 ist kleiner als die Helligkeit von H2)

Im Fall 1 werden die Schritte 1-4 des Verfahrens jeweils für beide HLC durchgeführt.

Im Fall 2 wird nur H1 gegenüber K getrappt und H2 gegenüber K und H1.

Für das Tappen von H1 nur gegenüber K werden wieder die o.g. Schritte 1-4 des Verfahrens durchgeführt. Für das Tappen von H2 gegenüber K und H1 werden die Schritte 1-5 im folgenden beschrieben:

Im Schritt 1 wird aus den drei Planes (H1, H2,K) eine weitere Plane (H2 ') erzeugt (~ bedeutet Negation, aus 0 wird 1 und aus 1 wird 0):

$$H2' = H2 \,\&\, \sim(K \mid H1)$$

In Schritt 2 wird der Inhalt dieser Plane vergrößert. Dazu kann wiederum das in der PCT/EP2004/007000 beschriebene Verfahren verwendet werden. Es können dabei zusammenhängende Objekte der Planes um bis zu 24 Pixel vergrößert werden. Für das Trapping-Problem werden allerdings nur ein, höchstens drei Pixel Vergrößerung benötigt.

$$H2'' = V(H2')$$

In Schritt 3 wird die dunklere Farbe, also schwarz berücksichtigt. Es wird die reine Überdeckung ermittelt

$$H2''' = (K \mid H1) \& H2''$$

In Schritt 4 wird die reine Überdeckung mit der originalen HLC gemischt.

$$H2'''' = H2''' \mid H2$$

Die Schritte 3 und 4 lassen sich wiederum zu H2'''' = ((K | H1) & H2'') | H2 zusammenfassen.

**Weitergehende Aspekte der Erfindung**

Bei filigranen Objekten wie z.B. feinen Linien oder kleinen Buchstaben auf Rastern können, wenn die Objektmaße wie z.B. Liniendicken kleiner werden als die benötigte Trappweite, beim Trapping "Schattenbilder" entstehen. Bei feinen Linien erkennt man dann z.B. neben der originalen Linie eine getrappte Linie. Diese Situation sollte bei Druckgeräten mit einer geringen Trappweite bzw. Registerungenauigkeit, z.B. von maximal 3 Pixel Trappweite, nicht erscheinen oder keinen erheblichen visuellen Effekt haben. Bei Druckgeräten mit größerer Trapweite wirken sich diese Effekte u.U. in nicht akzeptabler Weise aus. Das Druckbild kann dabei durch das Trappen gegenüber einem ohne Trapping erzeugten Druckbild verschlechtert werden. Um ein günstiges Trapping auch für solche Druckgeräte nutzen zu können wird vorgeschlagen, das Trapping nur bei "großen" Objekten durchzuführen und bei kleinen Objekten das Original zu belassen.

Bei einem reinen Bitmap-Trapping ist an sich eine Objekterkennung oder eine objektabhängige Bearbeitung nicht vorgesehen. Mit dem in der PCT/EP2004/007000 beschriebenen Verfahren bzw. der eingangs genannte Vorschrift V lassen sich jedoch mit Bitmapoperationen alle Objekte einer Plane mit vertretbarem Aufwand vergrößern. Das dort beschriebene Verfahren kann mit leichten Modifikationen auch zum Verkleinern von Objekten benutzt werden. Benutzt man dieses Verfahren zum Verkleinern aller Objekte, z.B. um 3 Pixel, und anschließend wieder zum Vergrößern um den gleichen Betrag, so werden alle Objekte, deren Abmessungen kleiner als 7 Pixel sind eliminiert. Man kann dann das Trapping nur auf die so resultierte Plane anwenden und anschließend die originale Plane wieder überlagern. Dadurch ist ein geeignetes Trapping für filigrane Objekte möglich.

**Patentansprüche**

**1.** Verfahren zum Trapping von Bilddaten, bei dem

- die Bilddaten in einem Ausgangsbild als Ausgangs-Bilddaten bildpunktweise als Farbauszugsdaten in Ausgangsfarben (Y, M, C) bereitgestellt werden, umfassend folgende Schritte:
- in einem ersten Schritt werden die Ausgangs-Bilddaten derart zu ersten transformierten Bilddaten (Y', M', C', R', G', B') transformiert, dass jeder Ausgangs-Bildpunkt, der nicht nur schwarz oder weiß ist, in Grundfarben dargestellt wird, wobei die Grundfarben die Ausgangsfarben (Y, M, C) umfassen und weitere Grundfarben (R, G, B), die durch logische UND-, ODER- und/oder NICHT Operationen aus den Ausgangsfarben ermittelt werden, und wobei jedem Bildpunkt der ersten transformierten Bilddaten (Y', M', C', R', G', B') maximal eine Grundfarbe (Y, M, C, R, G, B) zugeordnet wird,
- in einem zweiten Schritt werden die ersten transformierten Bilddaten (Y', M', C', R', G', B') grundfarbenweise derart zu zweiten transformierten Bilddaten (Y", M", C", R", G", B") transformiert, dass zusammenhängende Objekte einer Grundfarbe nach einer Vergrößerungsvorschrift vergrößert werden,

- in einem dritten Schritt werden die zweiten transformierten Bilddaten (Y", M", C", R", G", B") derart zu dritten transformierten Bilddaten (Y"', M"', C"', R"', G"', B"') gefiltert, dass das Bilddatum einer Grundfarbe zu einem Bildpunkt jeweils nur dann übernommen wird, wenn der Bildpunkt auch eine dunklere Grundfarbe enthält,
- in einem vierten Schritt werden die dritten transformierten Bilddaten (Y"', M"', C"', R"', G"', B"') derart zu vierten transformierten Bilddaten (Y"", M"", C"", R"", G"", B"") transformiert, dass den dritten transformierten Bilddaten (Y"', M"', C"', R"', G"', B"') einer Grundfarbe bildpunktweise die transformierten ersten Bilddaten (Y', M', C', R', G', B') derselben Grundfarbe dazugemischt werden.

2. Verfahren nach Anspruch 1, wobei in einem fünften Schritt die vierten transformierten Bilddaten (Y"", M"", C"", R"", G"", B"") bildpunktweise derart zu Ziel-Bilddaten der Ausgangsfarben (Y""', M""', C""') transformiert werden, dass den vierten transformierten Bilddaten der Ausgangsfarben (Y"", M"", C"") die vierten transformierten Bilddaten der weiteren Grundfarben (R"", G"", B"") dazugemischt werden.

3. Verfahren nach Anspruch 1 oder 2, wobei im ersten Schritt Ausgangs-Bilddaten der Farben Gelb, Magenta, Cyan und Schwarz in erste transformierte Bilddaten einenes Farbraums mit den Farben Gelb, Magenta, Cyan, Rot, Grün und Blau transformiert werden.

4. Verfahren nach Anspruch 3, wobei die erste Transformation nach den Regeln

$$C' \quad = C \,\&\, {\sim}M \,\&\, {\sim}Y \,\&\, {\sim}K \quad = C \,\&\, {\sim}(M \mid Y \mid K)$$

$$M' \quad = M \,\&\, {\sim}C \,\&\, {\sim}Y \,\&\, {\sim}K \quad = M \,\&\, {\sim}(C \mid Y \mid K)$$

$$Y' \quad = Y \,\&\, {\sim}C \,\&\, {\sim}M \,\&\, {\sim}K \quad = Y \,\&\, {\sim}(C \mid M \mid K)$$

$$R' \quad = M \,\&\, Y \,\&\, {\sim}C \,\&\, {\sim}K \quad = M \,\&\, Y \,\&\, {\sim}(C \mid K)$$

$$G' \quad = C \,\&\, Y \,\&\, {\sim}M \,\&\, {\sim}K \quad = C \,\&\, Y \,\&\, {\sim}(M \mid K)$$

$$B' \quad = C \,\&\, M \,\&\, {\sim}Y \,\&\, {\sim}K \quad = C \,\&\, M \,\&\, {\sim}(Y \mid K)$$

erfolgt, wobei

- die großen Buchstaben C, Y, M, R, G und B je eine Matrix der Ausgangs-Bilddaten der Farbauszüge cyan, gelb, magenta, rot, grün und blau bezeichnen,
- K eine Matrix der Bildpunkte des Farbauszugs schwarz bezeichnet,
- C', Y', M', R', G' und B' die durch den ersten Schritt gebildeten Matrizen der aus den jeweiligen Rechenoperationen zu den Farbauszügen gewonnenen ersten transformierten Bilddaten und
- die Operation "I" eine "ODER"-Operation, die Operation "&" eine UND-Operation und die Operation "-" die Negations-Operation bezeichnen.

5. Verfahren nach Anspruch 4, wobei die Bilddaten im zweiten Schritt zur Vergößerung der Objekte gemäß den Regeln

$$C'' = V(C'), \qquad M'' = V(M'), \qquad Y'' = V(Y'),$$

$$R'' = V(R'), \qquad G'' = V(G'), \qquad B'' = V(B')$$

verarbeitet werden, wobei V die Vorschrift für die Erzeugung der Objekte mit erweiterten Bildpunkten bezeichnet und C'', Y'', M'', R'', G'' und B'' Matrizen für die durch den zweiten Schritt und aus den jeweiligen Rechenoperationen zu den Farbauszügen gewonnenen zweiten transformierten Bilddaten.

6. Verfahren nach Anspruch 5, wobei die Bilddaten zu den Bildpunkten eines Farbauszuges in einer Bildpunktdatei gespeichert sind und im dritten Schritt zur Bildung der Objekte die Bildpunktdatei auf eine Abbildungsdatei abgebildet wird, wobei alle Bildpunkte der Abbildungsdatei, die innerhalb eines vorbestimmten Abstandes (d) zu korrespondierenden Bildpunkten in der Bildpunktdatei liegen, gesetzt werden.

7. Verfahren nach Anspruch 6, wobei die Bildpunkte in der Bildpunktdatei und in der Abbildungsdatei in Zeilen und Spalten angeordnet sind, und eine Tabelle mit eindimensionalen Bildpunktmustem vorgesehen ist, wobei jedem Bildpunktmuster ein korrespondierendes Abbildungspunktmuster zugeordnet ist, wobei bei der Abbildung in Richtung der Zeilen Gruppen von Bildpunkten einer Zeile der Bildpunktdatei mit den Bildpunktmustem verglichen werden, und wobei das zum übereinstimmenden Bildpunktmuster korrespondierende Abbildungspunktmuster in die korrespondierende Zeile an die korrespondierende Position in der Abbildungsdatei mit einer Oderverknüpfung eingetragen wird.

8. Verfahren nach Anspruch 6 oder 7, wobei der Abstand (d) in Abhängigkeit der Schriftzeichengröße und/oder der Rasterung und/oder der Granularität automatisch variiert wird.

9. Verfahren nach Anspruch 5, wobei im dritten Schritt für die Entscheidung, ob entsprechende Farbauszugsdaten des Ausgangsbild-Bildpunktes zur Erzeugung eines Zielbildpunktwertes um einen dem Zusatzbildpunkt entsprechenden Wert erweitert wird, folgende Regeln verwendet werden:

$$C''' = (M \mid K) \,\&\, C'', \qquad\qquad M''' = K \,\&\, M'',$$

$$Y''' = (C \mid M \mid K) \,\&\, Y'' \qquad\qquad R''' = ((M \,\&\, C) \mid K) \,\&\, R'',$$

$$G''' = (M \mid K) \,\&\, G'' \qquad\qquad B' = K \,\&\, B'',$$

wobei C''', Y''', M''', R''', G''' und B''' Matrizen für die durch den dritten Schritt und aus den jeweiligen Rechenoperationen zu den Farbauszügen gewonnenen dritten transformierten Bilddaten darstellen.

10. Verfahren nach den Anspruch 9, wobei im vierten Schritt folgende Regeln verwendet werden:

$$C'''' = C''' \mid C', \qquad\qquad M'''' = M''' \mid M',$$

$$Y'''' = Y''' \mid Y', \qquad\qquad R'''' = R''' \mid R',$$

$$G'''' = G''' \mid G', \qquad\qquad B'''' = B''' \mid B'$$

wobei C'''', Y'''', M'''', R'''', G'''' und B'''' Matrizen für die durch den vierten Schritt und aus den jeweiligen Rechenoperationen zu den Farbauszügen gewonnenen vierten transformierten Bilddaten darstellen.

11. Verfahren nach Anspruch 2, wobei im fünften Schritt folgende Regeln verwendet werden:

$$C'''' = C'' \mid G'' \mid B'',$$

$$M'''' = M'' \mid R'' \mid B'',$$

$$Y'''' = Y'' \mid R'' \mid G'',$$

wobei C'''', Y'''', M'''', R'''', G'''' und B'''' Matrizen für die durch den fünften Schritt und aus den jeweiligen Rechenoperationen zu den Farbauszügen gewonnenen fünften transformierten Bilddaten darstellen.

12. Verfahren nach einem der vorhergehenden Ansprüche, wobei die Bilddaten bildpunktweise zweistufig sind.

13. Verfahren nach einem der Ansprüche 1 bis 11, wobei die Bilddaten bildpunktweise mehr als zweistufig sind.

14. Verfahren nach einem der vorhergehenden Ansprüche, wobei das Trapping an Bitmaps durchgeführt wird.

15. Verfahren nach einem der vorhergehenden Ansprüche, wobei das Trapping unabhängig von einem Rippen, Separieren oder Screenen an Bitmap-Objekten eines PDL-Datenstroms erfolgt, die in den Datenstrom integriert sind.

16. Verfahren nach Anspruch 15, wobei das Trapping an einem screen shot-Bild, einer Grafik oder einem Foto erfolgt.

17. Verfahren nach einem der Ansprüche 1, 6, 7, 8, 12, 13, 14, 15 oder 16, wobei die Ausgangs-Bilddaten nur Daten zu zwei Farben (H, K) enthalten und aus den Daten der beiden Farbauszugsdaten (H, K) bildpunktweise ein weiterer Farbauszug (H') nach der Vorschrift

$$H' = H \,\&\, {\sim}\, K$$

gebildet wird, aus den Daten des weiteren Farbauszugs zusammenhängende Bildobjekten ermittelt und ein weiterer Auszug gebildet wird, in dem diese Bildobjekte vergrößert sind nach der Vorschrift

$$H'' = V(H'),$$

die dunklere Farbe aus dem weiteren Auszug gefiltert wird nach der Vorschrift

$$H''' = K \,\&\, H'$$

und der so erzeugte Auszug mit den Daten der ursprünglichen Farbauszüge überlagert wird nach der Vorschrift

$$H'''' = H''' \mid H,$$

wobei die Buchstaben H, K je eine Matrix der Ausgangs-Bilddaten der Farbauszüge der beiden Farben bezeichnen, H', K' die durch den ersten Schritt gebildeten Matrizen der aus den jeweiligen Rechenoperationen zu den Farbauszügen gewonnenen ersten transformierten Bilddaten,

H", K" die durch den zweiten Schritt gebildeten Matrizen der aus den jeweiligen Rechenoperationen zu den Farbauszügen gewonnenen zweiten transformierten Bilddaten,

H"', K"' die durch den dritten Schritt gebildeten Matrizen der aus den jeweiligen Rechenoperationen zu den Farbauszügen gewonnenen dritten transformierten Bilddaten,

H"", K"" die durch den vierten Schritt gebildeten Matrizen der aus den jeweiligen Rechenoperationen zu den Farbauszügen gewonnenen vierten transformierten Bilddaten und

V die Vergrößerungsvorschrift bezeichnen.

18. Verfahren nach einem der Ansprüche 1, 6, 7, 8, 12, 13, 14, 15 oder 16, wobei die Ausgangs-Bilddaten nur Daten zu zwei Highlight Color Farben (H1, H2) und zu schwarz (K) enthalten und wobei in Abhängigkeit zum Helligkeitsunterschied zwischen den beiden Highlight Color Farben verschiedene Trapping-Vorschriften verwendet werden.

19. Verfahren nach Anspruch 18, wobei im Falle von im wesentlichen gleichen Helligkeiten der beiden Highlight Color Farben ein Verfahren gemäß Anspruch 17 ausgeführt wird.

20. Verfahren nach Anspruch 19, wobei im Falle von wesentlich unterschiedlichen Helligkeiten der Highlight Color Farben die Daten der dunkleren Farbe (H1) nur gegenüber den Daten der schwarzen Farbe getrappt werden und die Daten der helleren Highlight Color Farbe (H2) gegenüber den Daten der beiden anderen Farben (H1, K).

21. Verfahren nach einem der vorhergehenden Ansprüche, wobei ermittelt oder festgelegt wird, ob filigrane Bildobjekte in den Bilddaten enthalten sind, und ein Bildauszug gebildet wird, in dem Bildobjekte nach einer Vorschrift (V) zunächst verkleinert werden und dann wieder vergrößert werden, so dass Bildobjekte, deren Maße zumindest in eine Richtung eine Untergrenze unterschreiten, im Zuge der Verkleinerung aus dem Bildauszug eliminiert werden, bevor die weiteren Trapping-Verfahrensschritte angewandt werden.

22. Verfahren nach einem der vorhergehenden Ansprüche, wobei aus den bitmapbasierten Bilddaten zusammenhängende Gebiete ermittelt und als Objekte klassifiziert werden und dann objektweise Trapping-Maßnahmen angewandt werden.

23. Computerprogramm, das bei seinem Laden und Ablaufen auf einem Computer einen Verfahrensablauf nach einem der vorhergehenden Ansprüche bewirkt.

24. Computer, auf dem ein Computerprogramm nach Anspruch 23 geladen ist.

25. Drucksystem mit einem Computer gemäß Anspruch 24.

**Claims**

1. A method for trapping of image data, wherein

- the image data are provided in an initial image image point-wise as colour separation data in initial colours (Y, M, C), comprising the following steps:
- in a first step the initial image data are transformed to first transformed image data (Y', M', C', R', G', B') such that each initial image point that is not only black or white is presented in basic colours, wherein the basic colours comprise the initial colours (Y, M, C) and further basic colours (R, G, B) that are determined from the initial colours by means of logical AND-, OR- and/or NEGATIONoperations and wherein each image point of the first transformed image data (Y', M', C', R', G', B') is assigned at most one basic colour (Y, M, C, R, G);
- in a second step the first transformed image data (Y', M', C', R', G', B') are transformed according to the basic colours to second transformed image data (Y", M", C", R", G", B") such that coherent objects of one basic colour are enlarged according to an enlargement rule;
- in a third step the second transformed image data (Y", M", C", R", G", B") are filtered to third transformed image data (Y"', M"', C"', R"', G"', B"') such that the image date of a basic colour to an image point is only accepted if the image point also contains a darker basic colour;
- in a fourth step the third transformed image data (Y"', M"', C"', R"', G"', B"') are transformed to fourth transformed image data (Y"", M"", C"", R"", G" ", B"") such that the transformed first image data (Y', M', C', R', G', B') of one basic colour are merged image point-wise to the third transformed image data (Y"', M"', C"', R"', G"', B"').

2. The method according to claim 1, wherein in a fifth step the fourth transformed image data (Y'''', M'''', C'''', R'''', G'''', B'''') are transformed image point-wise to target image data of the initial colours (Y''''', M''''', C''''') such that the fourth transformed image data of the further basic colours (R'''', G'''', B'''') are merged to the fourth transformed image data of the initial colours (Y''''', M''''', C''''').

3. The method according to claim 1 or 2, wherein in the first step initial image data of the colours yellow, magenta, cyan and black are transformed to first transformed image data of a colour space with the colours yellow, magenta, cyan, red, green and blue.

4. The method according to claim 3, wherein the first transformation occurs according to the rules:

$$C' \qquad = C \,\&\, {\sim}M \,\&\, {\sim}Y \,\&\, {\sim}K \qquad\qquad = C \,\&\, {\sim}(M|Y|K)$$

$$M' \qquad = M \,\&\, {\sim}C \,\&\, {\sim}Y \,\&\, {\sim}K \qquad\qquad = M \,\&\, {\sim}(C|Y|K)$$

$$Y' \qquad = Y \,\&\, {\sim}C \,\&\, {\sim}M \,\&\, {\sim}K \qquad\qquad = Y \,\&\, {\sim}(C|M|K)$$

$$R' \qquad = M \,\&\, Y \,\&\, {\sim}C \,\&\, {\sim}K \qquad\qquad = M \,\&\, Y \,\&\, {\sim}(C|K)$$

$$G' \qquad = C \,\&\, Y \,\&\, {\sim}M \,\&\, {\sim}K \qquad\qquad = C \,\&\, Y \,\&\, {\sim}(M|K)$$

$$B' \qquad = C \,\&\, M \,\&\, {\sim}Y \,\&\, {\sim}K \qquad\qquad = C \,\&\, M \,\&\, {\sim}(Y|K)$$

wherein

- the capital letters C, Y, M, R, G and B each designate a matrix of the initial image data of the colour separations cyan, yellow, magenta, red, green and blue;
- K designates a matrix of the image points of the colour separation black;
- C', Y', M', R', G' and B' designate the matrices formed by the first step of the first transformed image data obtained from the respective arithmetic operations associated with the colour separations;
- the operation "|" designates an "OR"-operation, the operation "&" designates and "AND"-operation and the operation "-" designates a NEGATION-operation.

5. The method according to claim 4, wherein the image data are processed in the second step for enlarging the objects according to the rules:

$$C'' = V(C'), \qquad\qquad M'' = V(M'), \qquad\qquad Y'' = V(Y')$$

$$R'' = V(R'), \qquad\qquad G'' = V(G'), \qquad\qquad B'' = V(B')$$

wherein V designates the rule for the generation of the objects with extended image points, and C", Y", M", R",

G" and B" designate matrices for the second transformed image data obtained from the second step and from the respective arithmetic operations associated with the colour separations.

6. The method according to claim 5, wherein the associated image points of the image data of a colour separation are stored in an image point file, and in a third step for forming the objects the image point file is mapped to a mapping file, wherein all image points of the mapping file that lie within a predetermined distance (d) of corresponding image points in the image point file are placed.

7. The method according to claim 6, wherein the image points in the image point file and in the mapping file are arranged in rows and columns and a table with one-dimensional image point patterns is provided, wherein a corresponding mapping point pattern is assigned to each image point pattern, wherein groups of image points of one row of the image point file are compared with the image point patterns when mapping in the direction of the rows, and wherein the mapping point pattern corresponding to the coinciding image point pattern is entered into the corresponding row at the corresponding position of the mapping file with an OR-link.

8. The method according to claim 6 or 7, wherein the distance (d) is automatically varied dependent on a font size and/or a rastering and/or a granularity.

9. The method according to claim 5, wherein in the third step the following rules are used for deciding as to whether corresponding colour separation data of the initial image image point are extended by a value corresponding to the additional image point to generate a target image point value:

$$C''' = (M|K) \& C'', \qquad M'' = K \& M'',$$

$$Y''' = (C|M|K) \& Y'' \qquad R''' = ((M \& C)|K) \& R''$$

$$G''' = (M|K) \& G'' \qquad B' = K \& B'',$$

wherein C''', Y''', M''', R''', G''' and B''' designate matrices for the third transformed image data obtained from the third step and from the corresponding arithmetic operation associated with the colour separations.

10. The method according to claim 9, wherein in the fourth step the following rules are used:

$$C'''' = C''' | C', \qquad M'''' = M''' | M',$$

$$Y'''' = Y''' | Y', \qquad R'''' = R''' | R',$$

$$G'''' = G''' | G', \qquad B'''' = B''' | B',$$

wherein C'''' Y'''', M''', R'''', G'''' and B'''' are matrices for the fourth transformed image data obtained from the fourth step and from the respective arithmetic operations associated with the colour separations.

11. The method according to claim 2, wherein in the fifth step the following rules are used:

$$C''''' = C'''' \mid G'''' \mid B'''',$$

$$M''''' = M'''' \mid R'''' \mid B'''',$$

$$Y''''' = Y'''' \mid R'''' \mid G'''',$$

wherein C'''', Y'''', M'''', R'''', G'''' and B'''' are matrices for the fifth transformed image data obtained from the fifth step and from the respective arithmetic operations associated with the colour separations.

**12.** The method according to one of the preceding claims, wherein the image data are two-stage image point-wise.

**13.** The method according to one of claims 1 to 11, wherein the image data are more than two-stage image point-wise.

**14.** The method according to one of the preceding claims, wherein the trapping is implemented on bitmaps.

**15.** The method according to one of the preceding claims, wherein the trapping occurs independent of a ripping, separation or screening of bitmap objects of a PDL data stream that are integrated into the data stream.

**16.** The method according to claim 15, wherein the trapping occurs on a screen shot image, a graphic or a photo.

**17.** The method according to one of claims 1, 6, 7, 8, 12, 13, 14, 15 or 16, wherein the initial image data only comprise data regarding two colours (H, K) and a further colour separation (H') from the data of the two colour separation data (H, K) image point-wise according to the rule

$$H' = H \ \& \sim K$$

is formed, and wherein from the data of the further colour separation coherent image objects are determined and a further separation is formed in which these image objects are enlarged according to the rule

$$H'' = V(H'),$$

filtering a darker colour from the further separation according to the rule

$$H''' = K \ \& \ H'$$

overlaying the separation so generated with the data of the original colour separations according to the rule

$$H'''' = H''' \mid H,$$

wherein the capital letters H, K each designate a matrix of the initial image data of the colour separations of both colours;

H', K' designate the matrices formed by the first step of the first transformed image data obtained from the respective arithmetic operations associated with the colour separations;

H", K" designate the matrices formed by the second step of the second transformed image data obtained from the respective arithmetic operations associated with the colour separations;

H"', K"' designate the matrices formed by the third step of the third transformed image data obtained from the respective arithmetic operations associated with the colour separations;

H"", K"" designate the matrices formed by the fourth step of the fourth transformed image data obtained from the respective arithmetic operations associated with the colour separations; and

V designates the enlargement rule.

18. The method according to one of claims 1, 6, 7, 8, 12, 13, 14, 15 or 16, wherein the initial image data contain only data regarding two highlight colour colours (H1, H2) and regarding black (K), and wherein various trapping rules are used dependent on a brightness difference between the two highlight colour colours.

19. The method according to claim 18, wherein the method according to claim 17 is executed in the case of substantially identical brightnesses of the two highlight colour colours.

20. The method according to claim 19, wherein in the event of significantly different brightnesses of the highlight colour colours the data of the darker colour (H1) are trapped only against the data of the black colour and the data of the brighter highlight colour colour (H2) are trapped against the data of the two other colours (H1, K).

21. The method according to one of the preceding claims, wherein it is determined or established whether filigree image objects are contained in the image data, and wherein an image separation is formed in which image objects are initially shrunk according to a rule (V) and then are enlarged again such that image objects the measurements of which under-run a lower limit at least in one direction are eliminated from the image separation in the course of the reduction before further trapping method steps are applied.

22. The method according to one of the preceding claims, wherein related areas from the image data based on bitmaps are determined and classified as objects and then trapping measures are used object-wise.

23. Computer program that, when loaded and run on a computer, causes a process according to one of the preceding claims.

24. Computer on which a computer program according to claim 23 is loaded.

25. Printing system with a computer according to claim 24.


**Revendications**

1. Procédé de trapping de données d'image, dans lequel

- les données d'image dans une image élémentaire se présentant sous la forme de données d'image élémentaire sont délivrées, quant aux points d'image, sous la forme de données de sélections chromatiques en couleurs élémentaires (Y, M, C), ledit procédé comportant les étapes suivantes :
- dans une première étape, les données d'image élémentaire sont transformées en premières données d'image transformées (Y', M', C', R', G', B') de telle sorte que chaque point d'image élémentaire qui n'est pas que noir ou blanc est représenté en couleurs fondamentales, les couleurs fondamentales comportant les couleurs élémentaires (Y, M, C) et d'autres couleurs fondamentales (R, G, B) qui sont déterminées par des opérations logiques ET, OU et/ou NON à partir des couleurs élémentaires, et à chaque point d'image des premières données d'image transformées (Y', M', C', R', G', B') est associée au maximum une couleur fondamentale (Y, M, C, R, G, B),
- dans une deuxième étape, les premières données d'image transformées (Y', M', C', R', G', B') sont transformées quant aux couleurs fondamentales en des deuxièmes données d'image transformées (Y", M", C", R", G", B") de sorte que des objets contigus d'une couleur fondamentale sont agrandis conformément à une instruction d'agrandissement,
- dans une troisième étape, les deuxièmes données d'image transformées (Y", M", C", R", G", B") sont filtrées pour donner des troisièmes données d'image transformées (Y''', M''', C''', R''', G''', B''') de sorte que la donnée d'image d'une couleur fondamentale est transférée vers un point d'image seulement dans le cas où le point d'image contient également une couleur fondamentale plus sombre,

- dans une quatrième étape, les troisièmes données d'image transformées (Y''', M''', C''', R''', G''', B''') sont transformées en des quatrièmes données d'image transformées (Y'''', M'''', C'''', R'''', G'''', B'''') de telle sorte qu'aux troisièmes données d'image transformées (Y''', M''', C''', R''', G''', B''') d'une couleur fondamentale sont ajoutées par mélange, quant aux points d'image, les premières données d'image transformées (Y', M', C', R', G', B') de la même couleur fondamentale.

2. Procédé selon la revendication 1, dans lequel dans une cinquième étape les quatrièmes données d'image transformées (Y'''', M'''', C'''', R'''', G'''', B'''') sont transformées, quant aux points d'image, en des données d'image cible des couleurs élémentaires (Y''''', M''''', C''''') de sorte qu'aux quatrièmes données d'image transformées des couleurs élémentaires (Y'''', M'''', C'''') sont ajoutées par mélange les quatrièmes données d'image transformées des autres couleurs fondamentales (R'''', G'''', B'''').

3. Procédé selon la revendication 1 ou 2, dans lequel dans la première étape des données d'image élémentaire des couleurs jaune, magenta, cyan et noir sont transformées en des premières données d'image transformées d'un espace chromatique comportant les couleurs jaune, magenta, cyan, rouge, vert et bleu.

4. Procédé selon la revendication 3, dans lequel la première transformation est effectuée conformément aux règles

$$C' \quad = C \ \& \ {\sim}M \ \& \ {\sim}Y \ \& \ {\sim}K \ = C \ \& \ {\sim}(M|Y|K)$$

$$M' \quad = M \ \& \ {\sim}C \ \& \ {\sim}Y \ \& \ {\sim}K \ = M \ \& \ {\sim}(C|Y|K)$$

$$Y' \quad = Y \ \& \ {\sim}C \ \& \ {\sim}M \ \& \ {\sim}K \ = Y \ \& \ {\sim}(C|M|K)$$

$$R' \quad = M \ \& \ Y \ \& \ {\sim}C \ \& \ {\sim}K \ = M \ \& \ Y \ \&{\sim}(C|K)$$

$$G' \quad = C \ \& \ Y \ \& \ {\sim}M \ \& \ {\sim}K \ = C \ \& \ Y \ \&{\sim}(M|K)$$

$$B' \quad = C \ \& \ M \ \& \ {\sim}Y \ \& \ {\sim}K \ = C \ \& \ M \ \&{\sim}(Y|K)$$

où

- les grandes lettres C, Y, M, R, G et B désignent chacune une matrice des données d'image élémentaire de la sélection chromatique cyan, jaune, magenta, rouge, vert et bleu,
- K désigne une matrice des points d'image de la sélection chromatique noir,
- C', Y', M', R', G' et B' désignent les matrices, formées par la première étape, des premières données d'image transformées obtenues à partir des opérations de calcul correspondantes pour donner les sélections chromatiques et
- l'opération « | » désigne une opération « OU », l'opération « & » désigne une opération « ET » et l'opération « ~ » désigne l'opération Négation.

5. Procédé selon la revendication 4, dans lequel les données d'image sont traitées dans la deuxième étape en vue d'agrandir les objets conformément aux règles

$$C'' = V(C'), \qquad M'' = V(M') \qquad Y'' = V(Y')$$

$$R'' = V(R'), \qquad G'' = V(G') \qquad B'' = V(B')$$

où V désigne l'instruction pour générer les objets avec des points d'image élargis et C", Y", R", G" et B" désignent des matrices pour les deuxièmes données d'image transformées obtenues par la deuxième étape et à partir des opérations de calcul correspondantes pour donner les sélections chromatiques.

6. Procédé selon la revendication 5, dans lequel les données d'image relatives aux points d'image d'une sélection chromatique sont mémorisées dans un fichier de points d'image et le fichier de points d'image est appliqué dans la troisième étape à un fichier d'application en vue de former des objets, tous les points d'image du fichier d'application qui se trouvent à une distance prédéterminée (d) de points d'image correspondants, étant placés.

7. Procédé selon la revendication 6, dans lequel les points d'image dans le fichier de points d'image et dans le fichier d'application sont disposés en lignes et colonnes et un tableau est prévu qui contient des modèles de points d'image unidimensionnels, à chaque modèle de points d'image étant associé un modèle de points d'application correspondant, des groupes de points d'image d'une ligne du fichier de points d'image étant comparés aux modèles de points d'image dans l'application dans la direction des lignes, et le modèle de points d'application correspondant au modèle de points d'image qui coïncide étant introduit dans la ligne correspondante à la position correspondante dans le fichier d'application par une combinaison OU.

8. Procédé selon la revendication 6 ou 7, dans lequel la distance (d) est modifiée automatiquement en fonction de la taille des caractères et/ou du tramage et/ou ou de la granularité.

9. Procédé selon la revendication 5, dans lequel pour décider dans la troisième étape si une données de sélection chromatique correspondante du point d'image d'une image élémentaire est étendue d'une valeur correspondant au point d'image additionnel pour générer une valeur de point d'image cible, on utilise les règles suivantes :

$$C''' = (M|K) \& C'', \qquad M''' = K \& M'',$$

$$Y''' = (C|M|K) \& Y'' \qquad R''' = ((M \& C)|K) \& R''$$

$$G''' = (M|K) \& G'' \qquad B''' = K \& B''$$

où C''', Y''', M''', R''' et B''' représentent des matrices pour les troisièmes données d'image transformées obtenues par la troisième étape et à partir des opérations de calcul respectives donnant les sélections chromatiques.

10. Procédé selon la revendication 9, dans lequel on utilise dans la quatrième étape les règles suivantes :

$$C'''' = C'''|C', \qquad M'''' = M'''|M',$$

$$Y'''' = Y'''|Y' \qquad R'''' = R'''|R'$$

$$G'''' = G''' | G'$$

$$B'''' = B''' | B'$$

où C'''', Y'''', M'''', R'''' et B'''' représentent des matrices pour les quatrièmes données d'image transformées obtenues par la quatrième étape et à partir des opérations de calcul respectives donnant les sélections chromatiques.

**11.** Procédé selon la revendication 2, dans lequel on utilise dans la cinquième étape les règles suivantes :

$$C''''' = C'''' | G'''' | B'''',$$

$$M''''' = M'''' | R'''' | B''''$$

$$Y''''' = Y'''' | R'''' | G''''$$

où C''''', Y''''', M''''', R''''' et B''''' représentent des matrices pour les cinquièmes données d'image transformées obtenues par la cinquième étape et à partir des opérations de calcul respectives donnant les sélections chromatiques.

**12.** Procédé selon l'une des revendications précédentes, dans lequel les données d'image ont, quant aux points d'image, deux niveaux.

**13.** Procédé selon l'une des revendications 1 à 11, dans lequel les données d'image ont, quant aux points d'image, plus de deux niveaux.

**14.** Procédé selon l'une des revendications précédentes, dans lequel le trapping est effectué en bitmap.

**15.** Procédé selon l'une des revendications précédentes, dans lequel le trapping est effectué indépendamment d'une extraction, d'une séparation ou d'un screening au niveau d'objets bitmap d'un flux de données PDL qui sont intégrés dans le flux de données.

**16.** Procédé selon la revendication 15, dans lequel le trapping est effectué au niveau d'une image capturée à l'écran, d'un graphique ou d'une photo.

**17.** Procédé selon l'une des revendications 1, 6, 7, 8, 12, 13, 14, 15 ou 16, dans lequel les données d'image élémentaire ne contiennent que des données relatives à deux couleurs (H, K) et une autre sélection chromatique (H') est formée à partir des données des deux données de sélection chromatique (H, K), quant aux points d'image, conformément à l'instruction

$$H' = H \& {\sim}K,$$

des objets images contigus sont déterminés à partir des données de l'autre sélection chromatique et une autre sélection est formée dans laquelle ces objets images sont agrandis conformément à l'instruction

$$H'' = V(H'),$$

la couleur la plus foncée est filtrée de l'autre sélection conformément à l'instruction

$$H''' = K \ \& \ H'$$

et la sélection ainsi générée est superposée aux données des sélections chromatiques d'origine conformément à l'instruction

$$H'''' = H''' | H,$$

les lettres H, K désignant chacune une matrice des données d'image élémentaire des sélections chromatiques des deux couleurs,

H', K' désignant les matrices, formées par la première étape, des premières données d'image transformées obtenues à partir des opérations de calcul respectives donnant les sélections chromatiques,

H", K" désignant les matrices, formées par la deuxième étape, des deuxièmes données d'image transformées obtenues à partir des opérations de calcul respectives donnant les sélections chromatiques,

H"', K"' désignant les matrices, formées par la troisième étape, des troisièmes données d'image transformées obtenues à partir des opérations de calcul respectives donnant les sélections chromatiques,

H"", K"" désignant les matrices, formées par la quatrième étape, des quatrièmes données d'image transformées obtenues à partir des opérations de calcul respectives donnant les sélections chromatiques,

V désignant l'instruction d'agrandissement.

18. Procédé selon l'une des revendications 1, 6, 7, 8, 12, 13, 14, 15 ou 16, dans lequel les données d'image élémentaire ne contiennent que des données relatives à deux couleurs Highlight Color (H1, H2) et au noir (K) et dans lequel différentes instructions de trapping sont utilisées en fonction de la différence de brillance entre les deux couleurs Highlight Color.

19. Procédé selon la revendication 18, dans lequel, lorsque les brillances des deux couleurs Highlight Color sont sensiblement égales, on met en oeuvre un procédé selon la revendication 17.

20. Procédé selon la revendication 19, dans lequel, lorsque les brillances des couleurs Highlight Color sont sensiblement différentes, les données de la couleur la plus sombre (H1) ne sont soumises au trapping que par rapport aux données de la couleur noire et les données de la couleur la plus claire sont soumises au trapping par rapport aux données des deux autres couleurs (H1, K).

21. Procédé selon l'une des revendications précédentes, dans lequel on détermine ou on spécifie si des objets images en filigrane sont contenus dans les données d'image, et si une copie d'image est réalisée dans laquelle des objets images sont tout d'abord réduits conformément à une instruction (V) puis sont de nouveau agrandis de sorte que des objets images, dont les dimensions sont inférieures au moins dans une direction à une limite inférieure, sont éliminés au cours de la réduction de la sélection d'image avant d'appliquer les autres étapes du procédé de trapping.

22. Procédé selon l'une des revendications précédentes, dans lequel des domaines contigus sont déterminés à partir des données d'image bitmap et sont classés comme objet puis on applique, quant à l'objet, des mesures de trapping.

23. Programme informatique qui met en oeuvre un procédé selon l'une des revendications précédentes lors de son chargement et de son exécution sur un ordinateur.

24. Ordinateur sur lequel est chargé un programme informatique selon la revendication 23.

25. Système d'impression comportant un ordinateur selon la revendication 24.

FIG. 1A

FIG. 1B

FIG. 2A

FIG. 2B

Diese Farbzuordnung gilt für alle Figuren

Gelb  Grün  Rot  Blau

Cyan  Magenta  Schwarz

FIG. 3

FIG. 4

EP 1 842 361 B1

28

FIG. 5

FIG. 6A

FIG. 6B

FIG. 7A

FIG. 7B

FIG. 8A

FIG. 8B

FIG. 9A

FIG. 9B

FIG. 10A

FIG. 10B

FIG. 11A

FIG. 11B

FIG. 12A

FIG. 12B

FIG. 12C

FIG. 12D

EP 1 842 361 B1

Schritt 1 (Y')          Schritt 2 (Y'')          Schritt 3 (Y''')          Schritt 4 (Y'''')

FIG. 13

Schritt 1 (C')  Schritt 2 (C'')  Schritt 3 (C''')  Schritt 4 (C'''')

FIG. 14

Schritt 1 (G')  Schritt 2 (G'')  Schritt 3 (G''')  Schritt 4 (G'''')

FIG. 15

EP 1 842 361 B1

Schritt 1 (M')    Schritt 2 (M'')    Schritt 3 (M''')    Schritt 4 (M'''')

FIG. 16

Schritt 1 (R')    Schritt 2 (R'')    Schritt 3 (R''')    Schritt 4 (R'''')

FIG. 17

Schritt 1 (B')    Schritt 2 (B")    Schritt 3 (B"')    Schritt 4 (B"")

FIG. 18

Y

G

Y

R

Y

FIG. 19A          FIG. 19B          FIG. 19C

FIG. 20A

FIG. 20B

EP 1 842 361 B1

**EP 1 842 361 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9839691 A1
- EP 200400700 W
- WO 2005001765 A2
- US 5581667 A
- EP 484890 A2
- US 20030090689 A1
- US 4931861 A

- EP 929189 A2
- DE 19912511 A1
- US 20010055130 A1
- EP 833216 A2
- EP 0322680 A
- EP 2004007000 W

**In der Beschreibung aufgeführte Nicht-Patentliteratur**

- The World of Printers, Technologies of Océ Printing Systems. Océ Printing Systems GmbH, 2002